(19) Europäisches Patentamt
European Patent Office
Office européen des brevets

(11) EP 3 074 469 B1

(12) FASCICULE DE BREVET EUROPEEN

(45) Date de publication et mention de la délivrance du brevet:
**17.10.2018 Bulletin 2018/42**

(51) Int Cl.:
*C09C 1/30* $^{(2006.01)}$      *B01J 19/12* $^{(2006.01)}$
*B01J 12/00* $^{(2006.01)}$      *B01J 13/04* $^{(2006.01)}$
*B01J 19/24* $^{(2006.01)}$      *B01J 4/00* $^{(2006.01)}$
*C01B 33/027* $^{(2006.01)}$      *C01B 33/029* $^{(2006.01)}$
*C01B 32/956* $^{(2017.01)}$

(21) Numéro de dépôt: **14816143.3**

(22) Date de dépôt: **28.11.2014**

(86) Numéro de dépôt international:
**PCT/EP2014/076021**

(87) Numéro de publication internationale:
**WO 2015/079050 (04.06.2015 Gazette 2015/22)**

(54) **PARTICULES SUBMICRONIQUES COMPRENANT DE L'ALUMINIUM**

SUBMIKROMETERGROSSE ALUMINIUMHALTIGE TEILCHEN

SUBMICRON-SIZED PARTICLES INCLUDING ALUMINUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2013 FR 1361856**

(43) Date de publication de la demande:
**05.10.2016 Bulletin 2016/40**

(73) Titulaire: **Nanomakers**
**78120 Rambouillet (FR)**

(72) Inventeurs:
• **TENEGAL, François**
**F-75014 Paris (FR)**
• **REAU, Adrien**
**F-34730 PRADES-LE-LEZ (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
WO-A1-01/32799      US-A- 4 424 066
US-A- 4 505 720      US-A1- 2009 026 421
US-A1- 2010 221 544

• LUTHER E P ET AL: "ALUMINA SURFACE MODIFICATION OF SILICON NITRIDE FOR COLLOIDAL PROCESSING", JOURNAL OF THE AMERICAN CERAMIC SOCIETY, BLACKWELL PUBLISHING, MALDEN, MA, US, vol. 78, no. 8, 1 août 1995 (1995-08-01), pages 2009-2014, XP000526381, ISSN: 0002-7820, DOI: 10.1111/J.1151-2916.1995.TB08611.X
• RODOT M ET AL: "METALLISATION PAR CVD ASSISTEE PAR LASER", VIDE,, vol. 40, no. 227, 1 mai 1985 (1985-05-01), pages 339-343, XP001306288,

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## Domaine technique

La présente invention concerne un procédé de fabrication de particules multicouches (typiquement une couche de coeur recouverte d'une couche supérieure), typiquement par pyrolyse laser. Elle concerne aussi un dispositif associé.

Un tel procédé permet par exemple à un utilisateur de fabriquer des particules submicroniques de silicium ou de carbure de silicium recouvertes chacune d'une couche d'aluminium ou d'oxyde d'aluminium

## Etat de la technique antérieure

On connaît des procédés de fabrication d'un matériau dans lesquels on utilise comme matière première un mélange de deux poudres dont au moins une est caractérisée par une taille de grain moyenne dans la gamme nanométrique :

- une poudre de particules d'un premier type, par exemple de carbure de silicium, et
- une poudre de particules d'un deuxième type, qui sont des particules d'Aluminium ou d'Oxyde d'Aluminium.

Ensuite, on chauffe le tout à une température modérée, éventuellement sous pression, sans le mener jusqu'à la température de fusion (procédé de « frittage »), pour obtenir un matériau dense nanostructuré.

On peut avoir des problèmes d'inhomogénéité entre le carbure de silicium et l'oxyde d'Aluminium ou l'aluminium dans le matériau obtenu provenant notamment de difficultés au mélange de deux poudres dont au moins une des deux est une poudre nanométrique. Ces difficultés proviennent des forces d'agglomérations qui sont plus élevées dans le cas de poudres nanométriques et qui rendent difficile l'obtention d'un matériau de microstructure ou nanostructure homogène lorsqu'une poudre de taille nanométrique est utilisée.

En outre, on peut avoir des problèmes de liaison ou de compatibilité chimique entre les particules des deux poudres nécessitant de réaliser des post traitements chimiques ou thermiques sur les poudres avant leur mise en oeuvre.

Le document US 4 505 720 A décrit des particules ayant un coeur de carbure de silicium recouvertes d'une couche. Les particules selon ce document ont un coeur qui comprend du silicium sous forme oxydée.

Le document US 4 424 066 A décrit des particules recouvertes d'une couche comprenant de l'aluminium. Les particules selon ce document ont un coeur qui comprend du silicium sous forme oxydée.

Le document « Alumina surface modification of silicon nitride for colloidal processing » de Luther at al. (journal of the American Ceramic Society vol. 78 n°8) décrit des particules recouvertes d'une couche comprenant de l'aluminium. Les particules selon ce document ont un coeur qui comprend du silicium sous forme oxydée.

Le document US 2009/026421 A1 décrit un procédé pour fabriquer des nanoparticules. Dans ce document, un élément chimique complémentaire est introduit par des injecteurs avant la zone d'interaction des réactifs avec le laser, et avec une direction de flux différente (approximativement à 45°) par rapport à la direction du flux de réaction sortant du conduit principal. Les particules selon ce document ont un coeur qui comprend du silicium sous forme oxydée.

Le document US 2010/221544 A1 ne décrit pas de procédé ou de dispositif par pyrolyse laser, mais plutôt à micro-ondes. Les particules selon ce document ont un coeur qui comprend du silicium sous forme oxydée.

Le document « Métallisation par CVD assistée par laser » de Rodot et al. (Vide, vol. 40 n°227) ne décrit pas de procédé ou de dispositif par pyrolyse laser, mais un procédé et dispositif de dépôt de couche sur un substrat.

Le document WO 01/32799 décrit un procédé de pyrolyse laser. Ce document décrit la fabrication de particules d'aluminium silicate (atomes de Si, O et Al mélangés).

Le but de l'invention est de proposer :

- une nouvelle matière première,
- un procédé de fabrication de cette matière première,
- diverses utilisations de cette matière première.

## Exposé de l'invention

Cet objectif est atteint avec un procédé selon la revendication 1.

Les particules fabriquées sont de préférence des particules submicroniques, c'est-à-dire des particules dont le diamètre est inférieur à 1000 nanomètres, de préférence compris entre 1 nanomètre et 1000 nanomètres. De préférence, les particules submicroniques sont des particules nanométriques, c'est-à-dire des particules dont le diamètre est inférieur à 100 nanomètres, de préférence compris entre 1 nanomètre et 100 nanomètres. Par diamètre d'une particule, on entend la distance reliant les deux points de cette particule les plus distants entre eux (par exemple la longueur dans le cas d'une particule en forme de bâtonnet). De même, par diamètre de coeur d'une particule, on entend la distance reliant les deux points de ce coeur les plus distants entre eux. De même, par diamètre de la couche comprenant le deuxième élément chimique, on entend le diamètre extérieur c'est-à-dire la distance reliant les deux points de cette couche les plus distants entre eux.

Chaque flux de réaction est de préférence dénué d'agent oxydant le premier élément chimique, et les coeurs de particules comprennent de préférence le premier élément chimique sous forme non oxydée. Ainsi, en se passant d'agent oxydant agencé pour oxyder le premier élément chimique, on peut obtenir des particules dont le coeur comprend le premier élément non oxydé. La couche de deuxième élément protège le coeur de l'oxydation, et permet de conserver le premier élément dans un état non oxydé, ce qui laisse plus de choix pour les utilisations possibles des particules fabriquées à moindre coût. Cela permet de conserver le premier élément du coeur non oxydé pour des nouvelles utilisations de particules non oxydées et ne pas avoir à appliquer un traitement visant à réduire la teneur en oxygène.

Ainsi, un tel procédé selon l'invention permet par exemple à un utilisateur de fabriquer des particules submicroniques de silicium non oxydé ou de carbure de silicium non oxydé recouvertes chacune d'une couche d'aluminium pur ou oxydé.

Le nombre d'atomes introduits du deuxième élément par rapport au nombre d'atomes introduits du premier élément correspond de préférence à un rapport fixé par l'épaisseur de la couche à réaliser. Ce rapport est calculé à partir des masses molaires et des densités des matériaux :

- aluminium pur ou oxyde d'aluminium pour la couche selon l'utilisation, et
- pour le coeur, silicium si le flux de réaction permettant de produire le coeur de particule ne contient que l'élément silicium, ou carbure de silicium si le flux de réaction contient, en plus de l'élément silicium, l'élément carbone dans un rapport proche de 1 pour 1 (1 molécule pour l'élément silicium et 1 molécule pour l'élément carbone).

Un paramètre supplémentaire tenant compte de l'agrégation des particules peut être introduit dans le calcul du rapport molaire.

Le deuxième élément chimique est introduit dans la chambre dans un flux de gaz entourant chaque flux de réaction :

- le deuxième élément chimique est introduit dans la chambre dans un flux de gaz de périphérie entourant chaque flux de réaction, émis à partir de plusieurs points répartis le long d'une courbe fermée entourant chaque flux de réaction et se propageant en direction de chaque flux de réaction, et le deuxième élément chimique est introduit dans la chambre dans le flux de gaz de périphérie après la zone d'interaction de chaque flux de réaction avec le faisceau de rayonnement. Ces modes permettent de conserver toute la flexibilité du procédé permettant de produire les coeurs de particule et notamment la pleine capacité à produire des coeurs de taille ajustable. Ces modes de réalisation améliorent de manière significative la maîtrise de l'homogénéité de répartition et d'épaisseur de la couche de deuxième élément sur chaque coeur de particule ; et/ou
- le procédé selon l'invention comprend en outre une étape d'introduire dans la chambre de réaction, avant la zone d'interaction de chaque flux de réaction, un flux de gaz de confinement entourant chaque flux de réaction et se propageant selon la direction de flux, et le deuxième élément chimique est introduit dans la chambre dans le flux de gaz de confinement avant la zone d'interaction de chaque flux de réaction.

L'introduction d'au moins un flux de réaction peut comprendre une introduction d'au moins un alignement de plusieurs flux de réaction séparés les uns des autres par le flux de gaz de confinement et comprenant chacun le premier élément chimique et se propageant chacun selon la direction de flux.

Le faisceau de rayonnement peut se propager le long d'une direction de rayonnement de préférence perpendiculaire à la direction de flux, et les flux de chaque alignement de flux de réaction peuvent être alignés le long d'une direction d'alignement perpendiculaire à la direction de flux et à la direction de rayonnement.

Le faisceau de rayonnement peut se propager le long d'une direction de rayonnement de préférence perpendiculaire à la direction de flux, et chaque flux de réaction peut posséder, dans un plan perpendiculaire à la direction de flux, une section s'étendant longitudinalement le long d'une direction d'élongation perpendiculaire à la direction de flux et à la direction de rayonnement.

Le deuxième élément chimique peut être introduit dans la chambre avec le premier élément chimique dans chaque flux de réaction avant la zone d'interaction de chaque flux de réaction.

Le premier élément chimique est de préférence du silicium (Si) et :

- les coeurs de particules peuvent être en silicium non oxydé; ou
- du carbone (de préférence sous la forme d'acétylène ($C_2H_2$) ou de $C_2H_4$ ou de $CH_4$) peut être introduit dans la chambre avec le premier élément chimique dans chaque flux de réaction avant la zone d'interaction de chaque flux de réaction, de sorte que les coeurs de particules comprennent du (ou de préférence consistent en) du carbure de silicium (SiC), de préférence non oxydé.

Le premier élément chimique est de préférence introduit dans la chambre sous la forme de silane ($SiH_4$).

Le deuxième élément est de préférence de l'aluminium. Il est de préférence introduit sous forme de triméthylaluminium vaporisé ($Al(CH_3)_3$), ou de manière générale sous la forme d'un composé de la catégorie des organométalliques d'aluminium.

Suivant encore un autre aspect de l'invention, il est proposé des particules comprenant chacune:

- un coeur comprenant comme premier élément chimique du silicium uniquement sous forme non oxydée (typiquement sous la forme de Silicium (Si) ou de préférence de carbure de silicium (SiC)), ayant un diamètre compris entre 3 et 900 nm, de préférence compris entre 3 et 99 nm (de préférence avec un écart type entre 1 et 90 nm), et

- une couche entourant le coeur, comprenant (de préférence consistant uniquement en) un deuxième élément chimique d'aluminium et ayant une épaisseur (pas nécessairement homogène) de couche d'au moins 0,5 nm, de préférence entre 0,5 et 50 nm.

Les particules sont de préférence des particules submicroniques, c'est-à-dire des particules dont le diamètre (coeur + couche) est inférieur à 1000 nanomètres, de préférence compris entre 1 nanomètre et 1000 nanomètres. De préférence, les particules submicroniques sont des particules nanométriques, c'est-à-dire des particules dont le diamètre (coeur + couche) est inférieur à 100 nanomètres, de préférence compris entre 1 nanomètre et 100 nanomètres.

Suivant encore un autre aspect de l'invention, il est proposé un procédé d'utilisation de particules selon l'invention selon la revendication 16.

Suivant encore un autre aspect de l'invention, il est proposé un dispositif selon la revendication 17.

Le réactif est de préférence dénué d'agent agencé pour oxyder le premier élément chimique.

L'injecteur de deuxième élément et l'injecteur de premier élément sont de préférence agencés ensemble pour introduire un nombre d'atomes du deuxième élément par rapport à un nombre d'atomes du premier élément selon un rapport permettant d'atteindre l'épaisseur souhaitée pour la réalisation de la couche d'aluminium ou d'oxyde d'aluminium.

L'injecteur de deuxième élément chimique est agencé pour introduire le deuxième élément chimique dans la chambre dans un flux de gaz entourant chaque flux de réaction :

- l'injecteur de deuxième élément chimique est agencé pour introduire le deuxième élément chimique dans la chambre dans un flux de gaz de périphérie entourant chaque flux de réaction, émis à partir de plusieurs points répartis le long d'une courbe fermée entourant chaque flux de réaction et agencés pour diriger le flux de gaz de périphérie en direction de chaque flux de réaction et l'injecteur de deuxième élément chimique est agencé pour introduire le deuxième élément chimique dans la chambre dans le flux de gaz de périphérie après la zone d'interaction de chaque flux de réaction, et/ou
- le dispositif selon l'invention comprend en outre un injecteur de gaz de confinement agencé pour introduire dans la chambre de réaction, avant la zone d'interaction de chaque flux de réaction, un flux de gaz de confinement entourant chaque flux de réaction et se propageant selon la direction de flux et l'injecteur de deuxième élément chimique comprend l'injecteur de gaz de confinement.

L'injecteur d'au moins un flux de réaction peut être agencé pour introduire dans la chambre au moins un alignement de plusieurs flux de réaction séparés les uns des autres par le flux de gaz de confinement et comprenant chacun le premier élément chimique et se propageant chacun selon la direction de flux.

L'émetteur peut être agencé pour que le faisceau de rayonnement se propage le long d'une direction de rayonnement de préférence perpendiculaire à la direction de flux, et l'injecteur d'au moins un flux de réaction peut être agencé pour que les flux de chaque alignement de flux de réaction soient alignés le long d'une direction d'alignement perpendiculaire à la direction de flux et à la direction de rayonnement.

L'émetteur peut être agencé pour que le faisceau de rayonnement se propage le long d'une direction de rayonnement de préférence perpendiculaire à la direction de flux, et l'injecteur d'au moins un flux de réaction peut être agencé pour que chaque flux de réaction possède, dans un plan perpendiculaire à la direction de flux, une section s'étendant longitudinalement le long d'une direction d'élongation perpendiculaire à la direction de flux et à la direction de rayonnement.

L'injecteur de deuxième élément chimique peut être agencé pour introduire le deuxième élément dans la chambre avec le premier élément chimique dans chaque flux de réaction avant la zone d'interaction de chaque flux de réaction.

Le premier élément chimique est de préférence du silicium (Si) et :

- le réactif peut comprendre du silane ($SiH_4$), et/ou
- le réactif peut comprendre du carbone (de préférence sous la forme d'acétylène ($C_2H_2$) ou de $C_2H_4$ ou de $CH_4$).

Le deuxième élément est de préférence de l'aluminium.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

- la figure 1 est une vue schématique de coupe de profil d'un flux de réaction (indifféremment le flux 1, 100, 101, 102, 103, 104, 105 ou 106 selon la variante considérée) dans un dispositif qui est selon l'invention pour les deuxième et troisième modes de réalisation,
- la figure 2 est une vue schématique de coupe (indifféremment au niveau du flux 1, 101, 102, ou 103 selon la variante considérée) de profil d'un dispositif qui est selon l'invention pour les deuxième et troisième modes de réalisation,

- la figure 3 est une vue schématique de coupe de face d'un alignement de flux de réaction 101, 102, 103 dans un dispositif qui est selon l'invention pour les deuxième et troisième modes de réalisation,
- la figure 4 est une vue schématique de coupe (indifféremment au niveau des flux 1, 100 ou 101, 104 ou 102, 105 ou 103, 106 selon la variante considérée) de profil d'une variante de dispositif qui est selon l'invention pour les deuxième et troisième modes de réalisation,
- la figure 5 est une vue en perspective d'un flux de réaction 1 accompagné d'un autre flux de réaction 100 optionnel,
- la figure 6 est une vue en perspective d'un premier alignement de flux de réaction 101, 102, 103 accompagné d'un autre alignement de flux de réaction 104, 105, 106 optionnel,
- la figure 7 est une vue schématique de coupe de profil d'un flux de réaction (indifféremment le flux 1, 100, 101, 102, 103, 104, 105 ou 106 selon la variante considérée) et d'un injecteur 22 annulaire agencé pour diffuser un flux de gaz de périphérie 7,
- la figure 8 est une vue schématique en perspective d'un flux de réaction (indifféremment le flux 1, 100, 101, 102, 103, 104, 105 ou 106 selon la variante considérée) et de l'injecteur annulaire 22,
- la figure 9 est une vue schématique de coupe de profil d'une particule,
- la figure 10 est une vue schématique de coupe de profil d'une autre particule fabriquée selon l'invention, et
- la figure 11 est un graphique de détection d'éléments chimiques par des techniques de Microscopie Electronique en Transmission et de perte d'énergie d'électron (STEM/HAADS/EELS), en fonction de la position le long d'un segment partant d'un coeur d'une particule et allant sur la couche 16 de cette même particule puis vers l'extérieur de cette particule.

Ces modes de réalisation étant nullement limitatifs, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou à différencier l'invention par rapport à l'état de la technique antérieure.

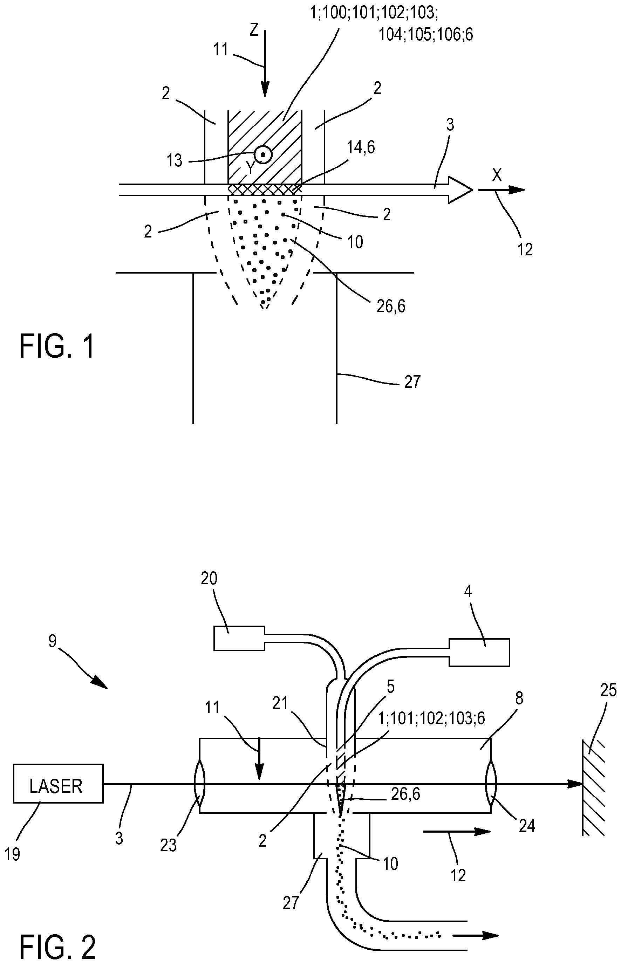

On va tout d'abord décrire, en référence aux figures 1 à 6, un premier mode de réalisation de dispositif 9 qui n'entre pas le cadre de la présente invention.

Ce premier mode de réalisation de dispositif 9 pour produire par pyrolyse laser des particules 10 comprend une source 4 de réactif. Le réactif comprend de préférence au moins un gaz de réaction et/ou au moins un liquide de réaction sous forme d'aérosol. Le réactif comprend un premier élément chimique. Le premier élément chimique est de préférence un métal (de préférence parmi le Fer, l'Aluminium, le Titane) ou un métalloïde (parmi du Bore, du Silicium, du Germanium, de l'Arsenic, de l'Antimoine, du Tellure, du Polonium). Plus précisément, le premier élément chimique dans le réactif est de préférence du silicium, de préférence sous la forme de $SiH_4$. Le réactif est de préférence du gaz de réaction (typiquement du gaz de $SiH_4$ ou du gaz $SiH_4+C_2H_2$ ou $SiH_4+C_2H_4$ ou de $SiH_4+CH_4$).

Le dispositif 9 comprend en outre une chambre de réaction 8 (délimitée de préférence par des parois en inox) reliée à la source 4 de réactif.

La chambre de réaction 8 est remplie d'une atmosphère de gaz neutre (parmi hélium, argon, krypton, xénon, azote ou un mélange), de préférence d'Argon ou d'Azote.

Un injecteur 5 de réactif est agencé pour introduire, dans la chambre 8 et en provenance de la source 4 de réactif, au moins un flux de réaction 1, 100, 101, 102, 103, 104, 105, 106, chaque flux de réaction se propageant selon une direction de flux 11 identique pour tous les flux de réaction et dans une zone 6 de flux de réaction par flux de réaction.

Un émetteur 19 (typiquement une source LASER) d'un faisceau de rayonnement 3 (typiquement un faisceau laser, de préférence d'aire entre 30 $mm^2$ et 3000 $mm^2$ en coupe perpendiculairement à la direction 12, de largeur le long de la direction 13, 18 comprise de préférence entre 2 et 5 cm, de longueur d'onde comprise entre 9 microns et 11 microns de préférence 10.6 microns pour le $SiH_4$ et de puissance comprise entre 50 et 5000 watt et de fréquence comprise entre 10000 et 100000 Hz) est agencé pour projeter le faisceau de rayonnement 3 à travers la chambre de réaction 8 de sorte que ce faisceau 3 soit en intersection, dans une zone d'interaction 14 par zone 6 de flux de réaction, avec chaque zone 6 de flux de réaction de manière à former dans chaque flux de réaction des coeurs de particules 15 comprenant le premier élément chimique.

Ainsi, chaque flux de réaction 1, 100, 101, 102, 103, 104, 105, 106 ou zone 6 de flux de réaction se décompose en trois parties :

- une zone d'interaction 14 avec le faisceau 3,
- une partie située avant (par rapport à direction de flux 11) sa zone d'interaction 14 et comprenant le réactif tel qu'introduit dans la chambre 8, et
- une partie située après (par rapport à direction de flux 11) sa zone d'interaction 14 et comprenant une flamme 26 issue de l'interaction entre le réactif et le faisceau 3 dans sa zone d'interaction 14.

Le faisceau 3 est mis en forme par un système optique pour lui donner une section de préférence rectangulaire (mais pourrait aussi être elliptique) et de préférence focalisée verticalement (i.e. dont l'aire diminue avec la progression du faisceau 3 selon la direction de rayonnement 12), comme décrit dans les documents FR 2 894 493 et FR 2 877 591.

Le faisceau 3 entre dans la chambre 8 à travers une fenêtre 23 en ZnSe et ressort de la chambre 8 à travers une autre fenêtre 24 en ZnSe avant d'être arrêté par un calorimètre 25 non réflecteur (« beam stopper »).

Le dispositif 9 comprend en outre une source d'un deuxième élément chimique. Le deuxième élément chimique est de préférence de l'aluminium injecté sous forme de Triméthylaluminium (ou TMA, de formule chimique $Al(CH_3)_3$, ou de manière générale sous la forme d'un composé de la catégorie des organométalliques d'aluminium) chauffé et vaporisé de préférence dans un gaz neutre comme par exemple de l'Argon. Un injecteur de deuxième élément est agencé pour introduire, dans la chambre de réaction 8, le deuxième élément chimique à partir de la source de deuxième élément de sorte que ce deuxième élément chimique soit apte à interagir dans la chambre 8 avec chaque flux de réaction 1, 100 101, 102, 103, 104, 105, 106 de manière à recouvrir les coeurs de particules 15 d'une couche 16 comprenant le deuxième élément chimique.

Dans le cas préférentiel, le réactif dans la source 4 et injecté dans la chambre 8 est dénué d'agent oxydant agencé pour oxyder le premier élément chimique. On entend par « agent agencé pour oxyder le premier élément chimique » (aussi appelé « agent oxydant du premier élément chimique ») tout atome ou molécule (par exemple $N_2O$) qui, dans le réactif (par exemple un gaz de $SiH_4$, éventuellement mélangé à du $C_2H_2$ ou du $C_2H_4$ ou du $CH_4$), possède un potentiel d'oxydo-réduction tendant à une oxydation du premier élément chimique (par exemple Si) à partir de la forme (par exemple $SiH_4$) dans laquelle il est injecté dans la chambre 8. De préférence, le réactif dans la source 4 et injecté dans la chambre 8 est dénué d'atome d'oxygène.

L'injecteur (5, 21 et/ou 22) de deuxième élément et l'injecteur 5 de premier élément sont au sein du dispositif 9 agencés ensemble (par leur débit et leurs proportions des différents gaz éventuellement mélangés qu'ils débitent tel que $SiH_4$ pour l'injecteur 5, argon ou azote pour l'injecteur 21 et $C_2H_2$ , $C_2H_4$ , $CH_4$ pour l'injecteur 5 et/ou 21 et/ou 22) pour introduire dans la chambre de réaction 8 par unité de temps (typiquement par minute) un nombre d'atomes du deuxième élément par rapport à un nombre d'atomes du premier élément selon un rapport sélectionné pour atteindre l'épaisseur souhaitée de la couche 16.

Typiquement, l'injecteur (5, 21 et/ou 22) de deuxième élément et l'injecteur 5 de premier élément sont au sein du dispositif 9 agencés ensemble pour introduire le rapport molaire souhaité entre le deuxième et le premier élément.

Par exemple, pour faire des particules ayant un diamètre $D_1$ de coeur et un diamètre $D_2$ de couche comprenant le deuxième élément chimique, on utilise le rapport suivant :

$$\frac{n_2}{n_1} = \frac{M_1}{d_1 V_1} \frac{d_2 V_2}{M_2}$$

avec :

$n_1$ le nombre d'atomes composant le coeur des particules 15, introduit dans la chambre de réaction (de préférence uniquement dans au moins un flux de réaction) par unité de temps. Par exemple :

- dans le cas d'un coeur en silicium pur, c'est le nombre $n_{Si}$ d'atomes de silicium introduit par unité de temps dans la chambre de réaction (de préférence uniquement dans au moins un flux de réaction),
- dans le cas d'un coeur en « mélange » comme en carbure de silicium, c'est le nombre $n_{Si}$ d'atomes de silicium introduit par unité de temps dans la chambre de réaction (de préférence uniquement dans au moins un flux de réaction) plus le nombre $n_C$ d'atomes de carbone introduit par unité de temps dans la chambre de réaction (de préférence uniquement dans l'au moins un flux de réaction), avec par exemple comme hypothèse $n_{Si}=n_C$.

$d_1$ la densité du matériau (par exemple Silicium pur, ou carbure de Silicium pur) composant le coeur 15 des particules,
$M_1$ la masse molaire du matériau (par exemple Silicium pur ou carbure de Silicium) composant le coeur 15 des particules,
$V_1$ le volume souhaité pour le coeur d'une particule 15 de diamètre D1, par approximation égal à

$$\frac{\pi \, D_1^3}{6}\,.$$

$n_2$ le nombre d'atomes composant la couche 16, introduit (dans la somme des flux de réaction 1, 100, 101, 102, 103, 104, 105, 106, de confinement 2 et éventuellement s'ils existent des flux de périphérie 7) par unité de temps dans la chambre de réaction. Par exemple :

- dans le cas d'une couche 16 en aluminium pur, c'est le nombre $n_{Al}$ d'atomes d'aluminium introduit par unité de temps dans la chambre de réaction,

$d_2$ la densité du matériau (par exemple aluminium pur ou aluminium oxydé) composant la couche 16,

$M_2$ la masse molaire du matériau (par exemple aluminium pur ou aluminium oxydé) composant la couche 16,

$V_2$ le volume souhaité pour une couche 16, par approximation égal à $\left( \dfrac{\pi\ D_2^3}{6} - \dfrac{\pi\ D_1^3}{6} \right).$

Le dispositif 9 comprend en outre une source 20 de gaz de confinement comprenant du gaz de confinement et un injecteur 21 de gaz de confinement agencé pour introduire dans la chambre de réaction 8, avant (par rapport à direction de flux 11) la zone d'interaction 14 de chaque flux de réaction, un flux de gaz de confinement 2 (de préférence commun à tous les flux de réaction) entourant chaque flux de réaction 1, 100 101, 102, 103, 104, 105, 106 (plus exactement en contact avec chaque flux de réaction 1, 100, 101, 102, 103, 104, 105, 106 sur tout le pourtour de chaque flux de réaction 1, 100, 101, 102, 103, 104, 105, 106 au moins à partir de l'injection du réactif dans la chambre 8 jusqu'à la zone d'interaction 14 de chaque flux de réaction, ce pourtour étant défini selon une ligne fermée contenue dans un plan perpendiculaire à la direction de flux 11) et se propageant selon la direction de flux 11.

Le gaz de confinement comprend un gaz neutre (parmi hélium, argon, azote ou un mélange de ceux-ci, de préférence de l'argon ou de l'azote). Le flux de gaz de confinement 2 possède deux fonctions :

- d'une part, il sert à confiner chaque flux de réaction pour éviter que les réactifs de chaque flux de réaction diffusent de manière radiale, ce qui risquerait de salir les parois intérieures de la chambre 8, et
- d'autre part, de refroidir (« effet de trempe ») chaque flamme 26 de flux de réaction créée après (par rapport à direction de flux 11) l'interaction du faisceau 3 avec respectivement chaque flux de réaction 1, 100, 101, 102, 103, 104, 105, 106.

L'émetteur 19 est agencé pour que le faisceau de rayonnement 3 se propage le long d'une direction de rayonnement 12 perpendiculaire à la direction de flux 11.

L'injecteur 5 d'au moins un flux de réaction 1, 100, 101, 102, 103, 104, 105, 106 est agencé pour que chaque flux de réaction 1, 100, 101, 102, 103, 104, 105, 106 possède, dans un plan perpendiculaire à la direction de flux 11, une section pouvant s'étendre longitudinalement le long d'une direction d'élongation 13 perpendiculaire à la direction de flux 11 et à la direction de rayonnement 12.

Dans une première variante du premier mode de réalisation de dispositif 9 qui peut correspondre à la vue de coupe de la figure 2, l'injecteur 5 de réactif est agencé pour introduire dans la chambre 8, et en provenance de la source 4 de réactif, un unique flux de réaction 1 se propageant selon la direction de flux 11 dans une zone 6 de flux de réaction. La section de l'injecteur 5 est typiquement un ovale de 4 mm de profondeur le long de la direction 12 et de 2 cm de large le long de la direction 13.

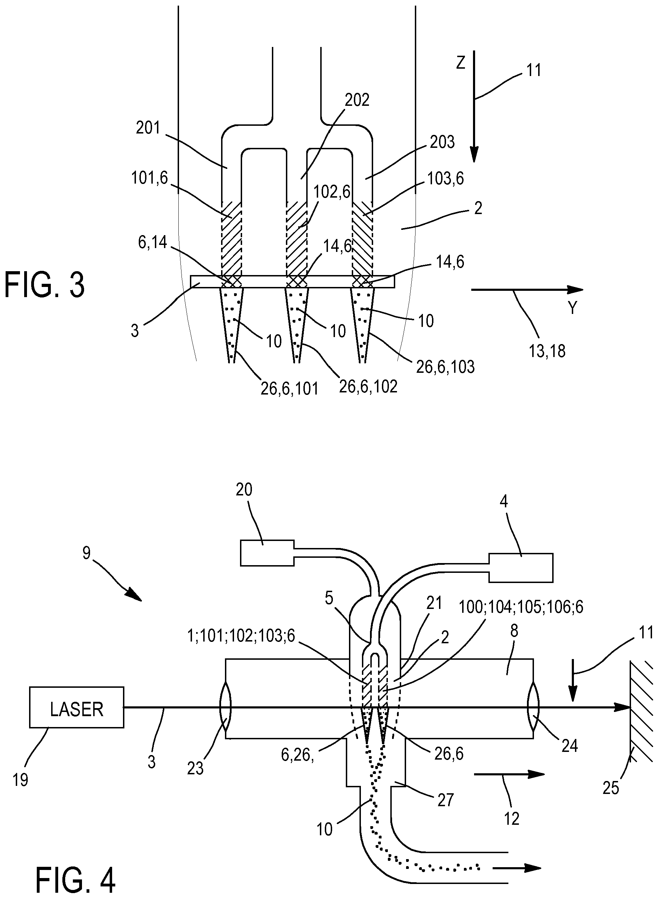

Dans une deuxième variante du premier mode de réalisation de dispositif 9 qui peut correspondre à la vue de coupe de profil de la figure 2 et de la vue de coupe de face de la figure 3, l'injecteur 5 d'au moins un flux de réaction est agencé pour introduire, dans la chambre 8 et en provenance de la source 4 de réactif, un alignement de plusieurs flux de réaction 101, 102, 103 séparés les uns des autres par le flux de gaz de confinement 2 et comprenant chacun le premier élément chimique et se propageant chacun selon la direction de flux 11.

Chaque flux 101, 102 ou 103 se propage selon la direction de flux 11 dans une zone 6 de flux de réaction qui lui est propre.

L'injecteur 5 d'au moins un flux de réaction 101, 102, 103 est agencé pour que, au sein de l'alignement de flux 101, 102, 103, les différents flux de réaction 101, 102, 103 soient alignés le long d'une direction d'alignement 18 perpendiculaire à la direction de flux 11 et à la direction de rayonnement 12.

Comme illustré sur la figure 3, l'injecteur 5 se subdivise en plusieurs buses d'injection 201, 202, 203 (une buse par flux de réaction). Chaque buse a une section qui est typiquement un disque, un oval ou un oblong de 3 mm de profondeur le long de la direction 12 et de 4 mm de large le long de la direction 13, 18. Le nombre de flux de réaction 101, 102, 103 et de buses 201, 202, 203 n'est pas du tout limité à trois, on pourrait en avoir beaucoup plus, ce nombre dépendant de la largeur de la tâche laser qui peut aller de 2 à 5 cm voire plus.

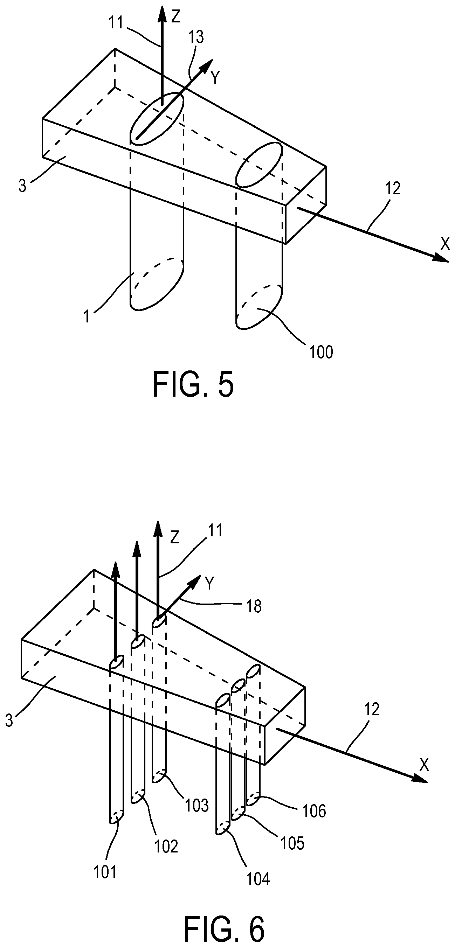

Dans une troisième variante du premier mode de réalisation de dispositif 9 qui peut correspondre à la vue de coupe de profil de la figure 4 et de la vue en perspective de la figure 5, l'injecteur 5 d'au moins un flux de réaction est agencé pour introduire dans la chambre 8 plusieurs flux de réaction 1, 100, séparés les uns des autres par le flux de gaz de confinement 2 et comprenant chacun le premier élément chimique et se propageant chacun selon la direction de flux 11.

L'injecteur 5 de réactif est agencé pour introduire, dans la chambre 8 et en provenance de la source 4 de réactif, plusieurs flux de réaction 1, 100, chaque flux 1, 100 se propageant selon la direction de flux 11 dans une zone 6 de flux de réaction qui lui est propre. Ces flux 1, 100 sont espacés selon la direction de rayonnement 12.

Les pertes par absorption du faisceau 3 par le flux de réaction 1 sont compensées par la focalisation (ou « convergence ») du faisceau 3 de sorte que la densité de puissance incidente du faisceau 3 sur chaque flux 1 ou 100 est identique pour tous les flux 1, 100 comme décrit dans le document FR 2 877 591.

Cette variante permet d'accroître le taux de production sur un seul réacteur en consommant de façon optimum l'énergie laser pour la production. On peut avoir deux flux 1, 100 l'un à la suite de l'autre comme illustré sur la figure 5, ou en avoir 3, 4 ou encore plus ainsi les uns à la suite des autres, disposés d'affilée avec un seul faisceau laser 3.

Dans une quatrième variante du premier mode de réalisation de dispositif 9 qui peut correspondre à la vue de coupe de profil de la figure 4 et de la vue en perspective de la figure 6, l'injecteur 5 d'au moins un flux de réaction est agencé pour introduire dans la chambre 8 et en provenance de la source 4 de réactif plusieurs alignements de flux de réaction séparés les uns des autres par le flux de gaz de confinement 2 et comprenant chacun le premier élément chimique et se propageant chacun selon la direction de flux 11.

Sur la figure 6, on voit un premier alignement de flux 101, 102, 103 et un deuxième alignement de flux 104, 105, 106

Chaque flux 101, 102, 103, 104, 105 ou 106 se propage selon la direction de flux 11 dans une zone 6 de flux de réaction qui lui est propre.

L'injecteur 5 d'au moins un flux de réaction est agencé pour que les flux respectivement 101, 102, 103 ou 104, 104 et 105 (ou plus précisément leur section dans un plan perpendiculaire à la direction de flux 11) au sein de chaque alignement soient alignés le long d'une direction d'alignement 18 perpendiculaire à la direction de flux 11 et à la direction de rayonnement 12.

Les alignements de flux sont espacés entre eux selon la direction de rayonnement 12.

Les différents alignements de flux sont parallèles entre eux selon la même direction 18.

L'injecteur 5 se subdivise en plusieurs buses d'injection (une buse par flux de réaction). Chaque buse a une section qui est typiquement un ovale de 3 mm de profondeur le long de la direction 12 et de 4 mm de large le long de la direction 13, 18.

Les pertes par absorption du faisceau 3 par le premier alignement de flux 101, 102, 103 sont compensées par la focalisation (ou « convergence ») du faisceau 3 de sorte que la densité de puissance incidente du faisceau 3 sur chaque alignement de flux 101, 102, 103 ou 104, 105, 106 est identique pour tous les flux 101, 102, 103, 104, 105 ou 106 selon le principe décrit dans le document FR 2 877 591.

En référence aux figures 1 à 6, dans le premier mode de réalisation de dispositif 9 qui n'entre pas le cadre de la présente invention (quelle que soit sa variante considérée parmi ses quatre variantes précédemment décrites), l'injecteur de deuxième élément chimique est agencé pour introduire le deuxième élément dans la chambre 8 avec le premier élément chimique dans chaque flux de réaction 1, 100, 101, 102, 103, 104, 105, 106 avant (par rapport à direction de flux 11) la zone d'interaction 14 de chaque flux de réaction.

L'injecteur de deuxième élément chimique comprend l'injecteur 5 de réactif. Plus exactement, l'injecteur de deuxième élément chimique et l'injecteur 5 de réactif sont confondus.

En référence aux figures 1 à 6, un deuxième mode de réalisation de dispositif 9 selon l'invention est strictement identique au premier mode de réalisation de dispositif 9 précédemment décrit (quelle que soit sa variante considérée parmi ses quatre variantes précédemment décrites), mis à part le fait que l'injecteur de deuxième élément chimique est agencé pour introduire le deuxième élément chimique dans la chambre 8 dans un flux de gaz 2 entourant chaque flux de réaction 1, 100, 101, 102, 103, 104, 105, 106.

Plus exactement, l'injecteur de deuxième élément chimique est agencé pour introduire le deuxième élément chimique dans la chambre 8 dans le flux de gaz de confinement 2 avant (par rapport à direction de flux 11) la zone d'interaction 14 de chaque flux de réaction.

L'injecteur de deuxième élément chimique comprend l'injecteur 21 de gaz de confinement. Plus exactement, l'injecteur de deuxième élément chimique et l'injecteur 21 de gaz de confinement sont confondus.

Ce deuxième mode de réalisation est de préférence mis en oeuvre au sein de la deuxième ou quatrième variante (comprenant un ou plusieurs alignement(s) de flux 101, 102, 103 et 104, 105, 106 des figures 3 et 6) car cela permet de maximiser l'aire d'interaction entre le gaz de confinement 2 comprenant le deuxième élément chimique et chaque flux de réaction comprenant le premier élément chimique.

En référence aux figures 2 à 8, un troisième mode de réalisation de dispositif 9 selon l'invention est strictement identique au premier mode de réalisation de dispositif 9 précédemment décrit (quelle que soit sa variante considérée parmi ses quatre variantes précédemment décrites), mis à part le fait que l'injecteur de deuxième élément chimique est agencé pour introduire le deuxième élément chimique dans la chambre 8 dans un flux de gaz 7 entourant chaque flux de réaction 1, 100, 101, 102, 103, 104, 105, 106.

L'injecteur de deuxième élément chimique comprend un injecteur 22 (de préférence de forme annulaire) :

- par flux de réaction 1, 100, 101, 102, 103, 104, 105, 106, ou
- commun entourant de manière globale tous les flux de réaction.

Pour chaque flux de réaction considéré 1, 100, 101, 102, 103, 104, 105, ou 106, l'injecteur de deuxième élément chimique est agencé pour introduire le deuxième élément chimique dans la chambre 8 dans un flux de gaz de périphérie 7 entourant ce flux de réaction 1, 100, 101, 102, 103, 104, 105, ou 106 et émis à partir de plusieurs points 17 répartis le long d'une courbe fermée (forme typiquement annulaire de l'injecteur 22) entourant ce flux de réaction et agencés pour diriger le flux de gaz de périphérie 7 en direction de ce flux de réaction.

Pour chaque flux de réaction considéré 1, 100, 101, 102, 103, 104, 105, ou 106, l'injecteur de deuxième élément chimique est agencé pour introduire le deuxième élément chimique dans la chambre 8 dans le flux de gaz de périphérie 7 après (par rapport à direction de flux 11) la zone d'interaction 14 de ce flux de réaction. Ceci est particulièrement intéressant, car cela permet d'avoir un bon contrôle (en jouant sur la puissance du faisceau 3) et une bonne homogénéité de fabrication des coeurs 15 de particules 10. La fabrication des couches 16 sur les coeurs 15 des particules ne vient pas prendre directement de l'énergie du faisceau 3 et ne perturbe donc pas la maîtrise que l'on a sur la fabrication des coeurs 15. En effet, la fabrication des couches 16 sur les coeurs 15 des particules utilise l'énergie de la flamme 26 après la zone d'interaction 14.

Ce troisième mode de réalisation de dispositif 9 comprend des moyens pour déplacer (non représentés, comprenant par exemple une platine de micro-déplacement) chaque injecteur 22 le long de la direction de flux 11 de manière à optimiser la couche 16 fabriquée pour les particules 10.

Bien entendu, les différentes variantes et les différents modes de réalisation du dispositif venant d'être décrits peuvent être combinés entre eux, et l'injecteur de deuxième élément chimique peut donc comprendre :

- l'injecteur 5 de flux de réaction, et/ou (de préférence et)
- au moins un (éventuellement les deux) parmi :

    ◦ l'injecteur 21 de gaz de confinement, et/ou
    ◦ un injecteur 22 de gaz de périphérie 7 par flux de réaction ou un injecteur commun 22 de gaz de périphérie 7 entourant de manière globale tous les flux de réaction.

On va maintenant décrire un procédé mis en oeuvre dans l'un quelconque des modes de réalisation de dispositif 9 venant d'être décrit.

Ce procédé pour produire par pyrolyse laser des particules 10, comprend les étapes suivantes :

- introduire dans la chambre de réaction 8, par l'injecteur 5 et en provenance de la source 4, au moins un flux de réaction 1, 100, 101, 102, 103, 104, 105, 106 comprenant le premier élément chimique et se propageant selon la direction de flux 11 ; chaque flux de réaction comprend lors de son introduction du réactif ; le débit gazeux typique de réactif introduit dans la chambre 8 est d'environ 20 litres par minutes.
- introduire dans la chambre de réaction 8, avant (par rapport à direction de flux 11) la zone d'interaction 14 de chaque flux de réaction, le flux de gaz de confinement 2 entourant chaque flux de réaction 1, 100, 101, 102, 103, 104, 105, 106 et se propageant selon la direction de flux 11; le débit typique de gaz de confinement introduit dans la chambre 8 est d'environ 50 litres par minutes.

- projeter, par l'émetteur 19, le faisceau de rayonnement 3 à travers la chambre de réaction 8 en intersection, dans une zone d'interaction 14 par flux de réaction, avec chaque flux de réaction 1, 100, 101, 102, 103, 104, 105, 106 pour former dans chaque flux de réaction des coeurs de particules 15 comprenant le premier élément chimique, et
- introduire, dans la chambre de réaction 8, le deuxième élément chimique interagissant avec chaque flux de réaction 1, 101, 102, 103, 104, 105, 106 pour recouvrir les coeurs de particules 15 d'une couche 16 (propre à chaque particule 10 et indépendante de la couche 16 des autres particules 10) comprenant le deuxième élément chimique.

Comme vu précédemment, le réactif des flux de réaction est dénué d'agent oxydant le premier élément chimique. Ainsi, les coeurs 15 de particules obtenus par ce procédé comprennent le premier élément chimique sous forme non oxydée.

Le nombre d'atomes introduits par unité de temps est dans un rapport molaire permettant d'atteindre l'épaisseur souhaitée pour la réalisation d'une couche 16 d'aluminium ou d'oxyde d'aluminium obtenu par oxydation de la couche d'aluminium.

Le faisceau de rayonnement 3 se propage le long de la direction de rayonnement 12 perpendiculaire à la direction de flux 11.

Chaque flux de réaction possède, dans un plan perpendiculaire à la direction de flux 11, une section s'étendant longitudinalement le long de la direction d'élongation 13 perpendiculaire à la direction de flux 11 et à la direction de rayonnement 12.

Les particules 10 ainsi fabriquées tombent dans un récupérateur 27 où elles sont refroidies avant d'être acheminées par gravité et/ou aspiration vers une installation exploitant les particules ou vers un conteneur pour stockage.

Dans un premier mode de réalisation de procédé qui n'entre pas le cadre de la présente invention mis en oeuvre dans le premier mode de réalisation de dispositif qui n'entre pas le cadre de la présente invention, le deuxième élément chimique est introduit dans la chambre 8 avec le premier élément chimique dans le réactif dans chaque flux de réaction 1, 100, 101, 102, 103, 104, 105, 106 avant (par rapport à direction de flux 11) la zone d'interaction 14 de chaque flux de réaction.

Dans un deuxième ou troisième mode de réalisation de procédé selon l'invention mis en oeuvre dans le deuxième ou troisième mode de réalisation de dispositif selon l'invention, le deuxième élément chimique est introduit dans la chambre 8 dans un flux de gaz 2 ou 7 entourant chaque flux de réaction 1, 100, 101, 102, 103, 104, 105, 106 et en contact avec chaque flux de réaction 1, 100, 101, 102, 103, 104, 105, 106.

Dans un deuxième mode de réalisation de procédé selon l'invention mis en oeuvre dans le deuxième mode de réalisation de dispositif selon l'invention, le deuxième élément chimique est introduit dans la chambre 8 dans le flux de gaz de confinement 2 avant (par rapport à direction de flux 11) la zone d'interaction 14 de chaque flux de réaction.

Ce mode de réalisation est particulièrement intéressant lorsque, comme précédemment décrit en référence à la figure 3 ou 6, l'introduction d'au moins un flux de réaction comprend une introduction de plusieurs flux de réaction alignés (alignement 101, 102, 103 et éventuellement en plus alignement 104, 105, 106) séparés les uns des autres par le flux de gaz de confinement 2 et comprenant chacun le premier élément chimique et se propageant chacun selon la direction de flux 11. On remarque que dans ce cas-là comme illustré sur la figure 3 le flux de gaz de confinement 2 est de préférence commun à tous les flux de réaction et sans discontinuité entre les différents flux de réaction. En outre, le faisceau de rayonnement 3 se propage le long de la direction de rayonnement 12 perpendiculaire à la direction de flux 11, et les différents flux de réaction 101, 102, 103 ou 104, 105, 106 au sein d'un alignement sont alignés le long de la direction d'alignement 18 perpendiculaire à la direction de flux 11 et à la direction de rayonnement 12.

Dans un troisième mode de réalisation de procédé selon l'invention mis en oeuvre dans le troisième mode de réalisation de dispositif selon l'invention, le deuxième élément chimique est introduit dans la chambre 8 dans un flux de gaz de périphérie 7 entourant chaque flux de réaction 1, 100, 101, 102, 103, 104, 105, 106, émis à partir de plusieurs points 17 répartis le long d'une courbe fermée entourant chaque flux de réaction et se propageant en direction des flux de réaction. Le deuxième élément chimique est introduit dans la chambre 8 dans le flux de gaz de périphérie 7 après (par rapport à direction de flux 11) la zone d'interaction 14 de chaque flux de réaction.

Ainsi, pour résumer ce que contient en général chacun des flux :

- chaque flux de réaction 1, 100, 101, 102, 103, 104, 105, 106 comprend (de préférence consiste uniquement en) :

  ◦ dans tous les cas, un type de molécule comprenant le premier élément chimique. Dans le cas où ce premier élément chimique est du silicium, cette molécule est de préférence un organométallique à base de silicium (généralement sous forme de liquide vaporisé). Cette molécule peut par exemple être de l'héxaméthyldisilazane. Cette molécule peut aussi par exemple être du silane ($SiH_4$).
  ◦ Optionnellement, si le coeur 15 est en carbure de silicium, un type de molécule comprenant du carbone, par exemple un alcène ou un alcane. Cette molécule peut par exemple être du $C_2H_2$ ou du $C_2H_4$ ou du $CH_4$.
  ◦ Optionnellement un gaz neutre ou un mélange de gaz neutre parmi hélium, argon, krypton, xénon, azote.
  ◦ Optionnellement, dans le premier mode de réalisation de procédé qui n'entre pas le cadre de la présente invention, un type de molécule comprenant de l'aluminium. Cette molécule peut par exemple être du triméthylaluminium vaporisé ($Al(CH_3)_3$). De manière générale, on peut utiliser un composé de la catégorie des organométalliques d'aluminium.

- chaque flux de gaz de confinement 2 comprend (de préférence consiste uniquement en) :

  ◦ dans tous les cas, un gaz neutre ou un mélange de gaz neutre parmi hélium, argon, krypton, xénon, azote.
  ◦ Optionnellement, dans le deuxième mode de réalisation de procédé selon l'invention, un type de molécule comprenant le deuxième élément chimique. Cette molécule peut par exemple être du triméthylaluminium vaporisé ($Al(CH_3)_3$). De manière générale, on peut utiliser un composé de la catégorie des organométalliques d'aluminium.

- chaque flux de gaz de périphérie 7, présent uniquement dans le troisième mode de réalisation de procédé selon l'invention, comprend (de préférence consiste uniquement en) :

  ◦ dans le troisième mode de réalisation de procédé selon l'invention, un type de molécule comprenant le deuxième élément chimique. Cette molécule peut par exemple être du triméthylaluminium vaporisé ($Al(CH_3)_3$). De manière générale, on peut utiliser un composé de la catégorie des organométalliques d'aluminium.
  ◦ Optionnellement un gaz neutre ou un mélange de gaz neutre parmi hélium, argon, krypton, xénon, azote.

Bien entendu, on peut imaginer différentes combinaisons de procédés selon l'invention précédemment décrits, dans lesquelles le deuxième élément chimique est introduit dans la chambre 8 :

- avec le premier élément chimique dans chaque flux de réaction 1, 100, 101, 102, 103, 104, 105, 106, et/ou
- dans un flux de gaz 2 ou 7 entourant chaque flux de réaction 1, 100, 101, 102, 103, 104, 105, 106 et en contact avec chaque flux de réaction 1, 100, 101, 102, 103, 104, 105, 106, notamment :

  ◦ dans le flux de gaz de confinement 2, et/ou
  ◦ dans un flux de gaz de périphérie 7 par flux de réaction ou dans un flux de gaz de périphérie 7 commun entourant de manière globale tous les flux de réaction.

## EXEMPLE 1 : troisième mode de réalisation de procédé selon l'invention ; coeur 15 comprenant du silicium non oxydé ; couche 16 en aluminium.

Dans cet exemple, le premier élément chimique est du silicium.

Le deuxième élément chimique est de l'aluminium pur qui peut être oxydé après production.

Le laser utilisé est un laser au CO2, la densité surfacique d'énergie incidente est de 800 Watts par centimètres carrés.

Le premier élément chimique est introduit à température ambiante (approximativement 20°C) dans la chambre 8 sous la forme de $SiH_4$ gazeux, à approximativement 18 litres par minutes de $SiH_4$ gazeux.

Le réactif de chaque flux de réaction est ainsi du silane ($SiH_4$) gazeux non mélangé à des agents oxydants ou à des atomes d'oxygène ou à des molécules comprenant des atomes d'oxygène, de sorte que les coeurs 15 de particules comprennent (et même de préférence consistent en) du silicium de préférence non oxydé (Si).

Le gaz de confinement 2 comprend un gaz neutre (argon gazeux) introduit dans la chambre 8 à température ambiante à 50 litres par minutes.

Le deuxième élément chimique est introduit dans la chambre de réation sous la forme de Triméthylaluminium (ou TMA, de formule chimique $Al(CH_3)_3$) ou de manière générale sous la forme d'un composé de la catégorie des organométalliques d'aluminium. Il est introduit dans la chambre à une température de 50°C dans le flux de gaz de périphérie 7 aussi porteur d'un gaz neutre d'argon. Le débit gazeux total Argon + TMA est de 33 litres par minute gazeux.

Le nombre d'atomes introduits d'aluminium (qui joue ici le rôle du deuxième élément) par rapport au nombre d'atomes introduits du premier élément (Silicium) est un rapport de un atome d'aluminium pour 3,7 atomes de silicium (1 mole de $Al(CH_3)_3$ pour 3,7 moles de $SiH_4$).

La couche 16 de chaque particule ainsi obtenue est en aluminium non oxydé.

En sortie du récupérateur, les particules 10 sont au choix :

- protégées de l'oxygène ou de manière générale de l'oxydation jusqu'à leur stockage (de préférence dans un containeur non solidaire de la chambre 8), de sorte que la couche 16 de chaque particule ainsi stockée reste en aluminium non oxydé, ou
- soumises à une oxydation lente de sorte que la couche 16 d'aluminium (mais pas le coeur 15) de chaque particule s'oxyde.

On peut ensuite utiliser les particules obtenues, selon divers procédés dont :

- un procédé, caractérisé en ce que l'on fabrique une pièce par frittage d'une poudre comprenant ces particules (chauffage typiquement à 1000°C), et/ou
- un procédé, dans lequel on mélange des particules d'aluminium avec des particules selon l'invention ayant un coeur 15 recouvert d'une couche 16 d'aluminium, puis en ce que l'on chauffe (typiquement à 1000°C) puis refroidi le mélange de manière à solidariser les particules d'aluminium avec les particules selon l'invention, afin d'obtenir un matériau d'aluminium enrichi avec ce qui compose le coeur 15 des particules selon l'invention.

## EXEMPLE 2 : troisième mode de réalisation de procédé selon l'invention ; coeur 15 comprenant du carbure de silicium (SiC) non oxydé ; couche 16 en aluminium

L'exemple 2 ne sera décrit que pour ses différences avec l'exemple 1. L'exemple 2 est identique à l'exemple 1, sauf en ce que dans l'exemple 2 la densité surfacique d'énergie incidente est de 1500 Watts par centimètres carrés et le réactif de chaque flux de réaction est un mélange de :

- silane ($SiH_4$) gazeux non mélangé à des agents oxydants ou à des atomes d'oxygène ou à des molécules comprenant des atomes d'oxygène, et
- de $C_2H_2$ gazeux non mélangé à des agents oxydants ou à des atomes d'oxygène ou à des molécules comprenant des atomes d'oxygène de sorte que les coeurs 15 de particules comprennent (de préférence consistent en) du carbure de silicium (SiC) de préférence non oxydé.

## PARTICULES OBTENUES

Des particules selon le premier exemple ont été fabriquées selon l'exemple 1 et l'exemple 2 avec le troisième mode de réalisation de dispositif 9 seul (i.e. avec le troisième mode de réalisation de procédé selon l'invention). Elles sont soumises à une oxydation lente en fin de production de sorte de générer une couche d'oxyde d'aluminium.

La taille des particules 10 obtenues correspond à un diamètre moyen $D_1$ de coeur déterminé à partir de la mesure de surface spécifique et de densité :

- de 100 nm dans l'exemple 1 et
- de 30 nm dans l'exemple 2,

et une épaisseur de couche 16 (la moitié de $D_2$-$D_1$) d'oxyde d'aluminium d'environ 3-10 nm d'épaisseur.

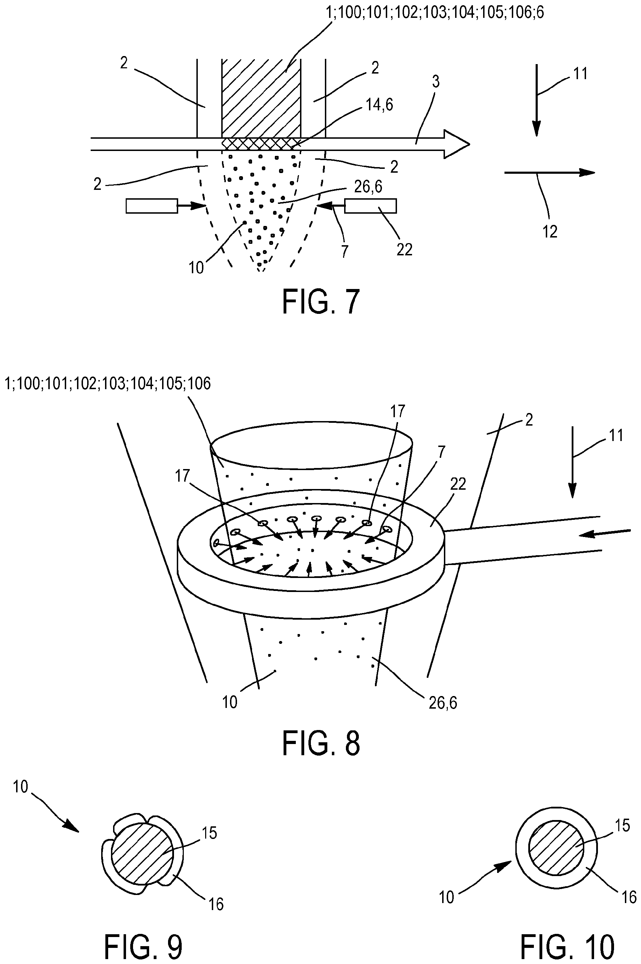

Par des techniques de Microscopie électronique en transmission, on peut voir des particules 10 (souvent regroupées en agrégats solides et/ou agglomérées du fait des interactions de type Van der Waals entre les particules). L'homogénéité de la couche 16 est excellente (par exemple par comparaison entre les figures 9 et 10) en utilisant le troisième mode de réalisation de procédé selon l'invention, dans lequel le deuxième élément chimique est introduit dans la chambre 8 dans un flux de gaz 7 entourant chaque flux de réaction 1, 100, 101, 102, 103, 104, 105, 106 et en contact avec chaque flux de réaction 1, 100, 101, 102, 103, 104, 105, 106. Ainsi en référence à la figure 10, on obtient pour chaque particule 10 une couche 16 d'épaisseur à peu prêt uniforme qui recouvre l'intégralité de son coeur 15. Les particules sont quasiment sphériques, et évoquent des boules à facettes.

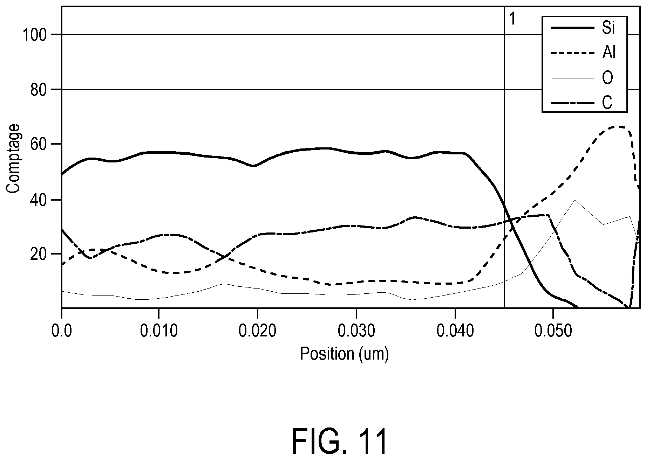

La figure 11 est un graphique de détection d'éléments chimiques par des techniques STEM/EELS de Microscopie électronique en transmission, en fonction (sur l'axe des abscisses) de la position le long d'un segment partant d'un coeur 15 d'une particule et allant sur la couche 16 de cette même particule puis vers l'extérieur de cette particule. L'axe des ordonnées est une intensité reliée à la proportion des éléments détectés.

Dans la couche 16, on détecte de l'aluminium et de l'oxygène, mais pas de carbone ou de silicium.

Dans le coeur 15, on détecte du Silicium et du carbone.

Au niveau du coeur 15, on détecte aussi un peu d'aluminium et d'oxygène, du fait que la zone imagée du coeur 15 est superposée à la couche 16. Il s'agit en effet d'un profil réalisé en déplaçant une sonde d'analyse le long d'un axe situé au dessus du grain et il en résulte lorsque la sonde se déplace au niveau du coeur 15 une superposition des signaux majoritaires provenant du coeur et minoritaires provenant de la surface.

On remarque que dans l'exemple 1 et l'exemple 2, la couche 16 ne comprend pas le premier élément chimique (sous une forme quelconque).

On remarque que dans l'exemple 1 et l'exemple 2, le coeur 15 ne comprend pas le premier élément chimique sous forme oxydée, mais comprend ce premier élément chimique uniquement sous forme non-oxydée.

Le troisième mode de réalisation de l'invention est donc préféré pour plusieurs raison :

- meilleure homogénéité de couche 16,
- meilleur contrôle et homogénéité des coeurs 15.

On note de meilleurs résultats du troisième mode de réalisation seul que du deuxième et premier mode de réalisation seul.

Par comparaison, en modifiant les premier et deuxième exemples dans le cadre du deuxième mode de réalisation de procédé selon l'invention, on remarque une moins bonne maîtrise du coeur 15, et des problèmes d'homogénéité. En particulier, on remarque que certains coeurs 15 comprennent en outre le deuxième élément chimique (traces d'aluminium), et on remarque l'existence de grains composés d'aluminium.

Par comparaison, en modifiant les premier et deuxième exemples dans le cadre du premier mode de réalisation de procédé qui n'entre pas le cadre de la présente invention, on remarque des problèmes supplémentaires d'homogénéité.

Bien sûr, l'invention n'est pas limitée aux exemples, modes de réalisation et variantes qui viennent d'être décrits et de nombreux aménagements peuvent être apportés à ces exemples sans sortir du cadre de l'invention.

Notamment, les exemples et modes de réalisation précédemment décrits ne sont pas incompatibles avec l'existence d'une interface entre le coeur 15 et la couche 16 d'une même particule.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

**Revendications**

1. Procédé pour produire des particules (10), comprenant les étapes suivantes :

   - Introduire dans une chambre de réaction (8) au moins un flux de réaction (1, 100, 101, 102, 103, 104, 105, 106) comprenant comme premier élément chimique du Silicium et se propageant selon une direction de flux (11),
   - Projeter un faisceau de rayonnement (3) à travers la chambre de réaction (8) en intersection avec chaque flux de réaction (1, 100, 101, 102, 103, 104, 105, 106) dans une zone d'interaction (14) par flux de réaction, pour former dans chaque flux de réaction des coeurs de particules (15) comprenant le premier élément chimique, et
   - Introduire, dans la chambre de réaction (8), un deuxième élément chimique interagissant avec chaque flux de réaction (1, 100, 101, 102, 103, 104, 105, 106) pour recouvrir les coeurs de particules (15) d'une couche (16) comprenant le deuxième élément chimique, ce deuxième élément chimique étant de l'aluminium

   le deuxième élément chimique étant introduit dans la chambre (8) dans un flux de gaz (2 ;7) entourant chaque flux de réaction (1, 100, 101, 102, 103, 104, 105, 106), **caractérisé en ce que** :

   - le deuxième élément chimique est introduit dans la chambre (8) dans un flux de gaz de périphérie (7) entourant chaque flux de réaction (1, 100, 101, 102, 103, 104, 105, 106), émis à partir de plusieurs points (17) répartis le long d'une courbe fermée entourant chaque flux de réaction (1, 100, 101, 102, 103, 104, 105, 106) et se propageant en direction de chaque flux de réaction, le deuxième élément chimique étant introduit dans la chambre (8) dans le flux de gaz de périphérie (7) après la zone d'interaction (14) de chaque flux de réaction, et/ou

- il comprend en outre comme étape introduire dans la chambre de réaction (8), avant la zone d'interaction (14) de chaque flux de réaction, un flux de gaz de confinement (2) entourant chaque flux de réaction (1, 100, 101, 102, 103, 104, 105, 106) et se propageant selon la direction de flux (11), le deuxième élément chimique étant introduit dans la chambre (8) dans le flux de gaz de confinement (2) avant la zone d'interaction (14) de chaque flux de réaction.

2. Procédé selon la revendication 1, **caractérisé en ce que** chaque flux de réaction (1, 100, 101, 102, 103, 104, 105, 106) est dénué d'agent oxydant le premier élément chimique, et les coeurs (15) de particules comprenant le premier élément chimique sous forme non oxydée.

3. Procédé selon la revendication 1 ou 2, **caractérisé en ce que** le deuxième élément chimique est introduit dans la chambre (8) dans le flux de gaz de périphérie (7) entourant chaque flux de réaction (1, 100, 101, 102, 103, 104, 105, 106), émis à partir de plusieurs points (17) répartis le long de la courbe fermée entourant chaque flux de réaction (1, 100, 101, 102, 103, 104, 105, 106) et se propageant en direction de chaque flux de réaction, le deuxième élément chimique étant introduit dans la chambre (8) dans le flux de gaz de périphérie (7) après la zone d'interaction (14) de chaque flux de réaction.

4. Procédé selon l'une quelconque des revendications 1 à 3, **caractérisé en ce qu'**il comprend l'étape d'introduire dans la chambre de réaction (8), avant la zone d'interaction (14) de chaque flux de réaction, le flux de gaz de confinement (2) entourant chaque flux de réaction (1, 100, 101, 102, 103, 104, 105, 106) et se propageant selon la direction de flux (11), le deuxième élément chimique étant introduit dans la chambre (8) dans le flux de gaz de confinement (2) avant la zone d'interaction (14) de chaque flux de réaction.

5. Procédé selon la revendication 4, **caractérisé en ce que** l'introduction d'au moins un flux de réaction comprend une introduction d'au moins un alignement de plusieurs flux de réaction (101, 102, 103 ; 104, 105, 106) séparés les uns des autres par le flux de gaz de confinement (2) et comprenant chacun le premier élément chimique et se propageant chacun selon la direction de flux (11).

6. Procédé selon la revendication 5, **caractérisé en ce que** le faisceau de rayonnement (3) se propage le long d'une direction de rayonnement (12) perpendiculaire à la direction de flux (11), et **en ce que** les flux de chaque alignement de flux de réaction (101, 102, 103 ; 104, 105, 106) sont alignés le long d'une direction d'alignement (18) perpendiculaire à la direction de flux (11) et à la direction de rayonnement (12).

7. Procédé selon l'une quelconque des revendications 1 à 6, **caractérisé en ce que** le faisceau de rayonnement (3) se propage le long d'une direction de rayonnement (12) perpendiculaire à la direction de flux (11), et **en ce que** chaque flux de réaction (1, 100, 101, 102, 103, 104, 105, 106) possède, dans un plan perpendiculaire à la direction de flux (11), une section s'étendant longitudinalement le long d'une direction d'élongation (13) perpendiculaire à la direction de flux (11) et à la direction de rayonnement (12).

8. Procédé selon l'une quelconque des revendications précédentes, **caractérisé en ce que** le deuxième élément chimique est introduit dans la chambre (8) avec le premier élément chimique dans chaque flux de réaction (1, 100, 101, 102, 103, 104, 105, 106) avant la zone d'interaction (14) de chaque flux de réaction.

9. Procédé selon l'une quelconque des revendications précédentes, **caractérisé en ce que** le premier élément chimique est introduit dans la chambre (8) sous la forme de $SiH_4$.

10. Procédé selon l'une quelconque des revendications précédentes, **caractérisé en ce que** les coeurs (15) de particules (10) sont en silicium.

11. Procédé selon l'une quelconque des revendications 1 à 9, **caractérisé en ce que** du carbone est introduit dans la chambre avec le premier élément chimique dans chaque flux de réaction avant la zone d'interaction de chaque flux de réaction, de sorte que les coeurs de particules comprennent du carbure de silicium.

12. Particules comprenant chacune:

   - un coeur (15) comprenant comme premier élément chimique du silicium uniquement sous forme non oxydée, ayant un diamètre compris entre 3 et 900 nm, et
   - une couche (16) entourant le coeur, comprenant un deuxième élément chimique d'aluminium et ayant une épaisseur de couche d'au moins 0,5 nm.

13. Particules selon la revendication 12, **caractérisé en ce que** leur diamètre est inférieur à 100 nanomètres.

**14.** Particules selon la revendication 12 ou 13, **caractérisé en ce que** le coeur est en silicium.

**15.** Particules selon l'une quelconque des revendications 12 à 14, **caractérisé en ce que** le coeur comprend ou consiste en du carbure de silicium.

**16.** Procédé, **caractérisé en ce que** l'on mélange des particules d'aluminium avec des particules selon l'une quelconque des revendications 12 à 15, puis **en ce que** l'on chauffe puis refroidi le mélange de manière à solidariser les particules d'aluminium avec des particules selon l'une quelconque des revendications 12 à 15, afin d'obtenir une matériau d'aluminium enrichi en silicium ou en carbure de silicium

**17.** Dispositif (9) pour produire des particules (10), comprenant:

- une source de réactif comprenant du réactif, ce réactif comprenant comme premier élément chimique du silicium;
- une chambre de réaction (8) reliée à la source de réactif ;
- un injecteur de réactif agencé pour introduire, dans la chambre (8) et en provenance de la source de réactif, au moins un flux de réaction (1, 100, 101, 102, 103, 104, 105, 106) comprenant ledit réactif et se propageant selon une direction de flux (11) dans une zone (6) de flux de réaction par flux de réaction,
- un émetteur d'un faisceau de rayonnement agencé pour projeter le faisceau de rayonnement (3) à travers la chambre de réaction (8) en intersection avec chaque zone (6) de flux de réaction (1, 100, 101, 102, 103, 104, 105, 106) dans une zone d'interaction (14) par flux de réaction,
- une source d'un deuxième élément chimique, ce deuxième élément chimique étant de l'aluminium, et
- un injecteur de deuxième élément agencé pour introduire, dans la chambre de réaction (8), le deuxième élément chimique à partir de la source de deuxième élément de sorte que ce deuxième élément chimique soit apte à interagir dans la chambre (8) avec chaque flux de réaction (1, 100, 101, 102, 103, 104, 105, 106) l'injecteur de deuxième élément chimique étant agencé pour introduire le deuxième élément chimique dans la chambre (8) dans un flux de gaz (2 ;7) entourant chaque flux de réaction (1, 100, 101, 102, 103, 104, 105, 106), **caractérisé en ce que** :

- l'injecteur de deuxième élément chimique est agencé pour introduire le deuxième élément chimique dans la chambre (8) dans un flux de gaz de périphérie (7) entourant chaque flux de réaction (1, 100, 101, 102, 103, 104, 105, 106), émis à partir de plusieurs points (17) répartis le long d'une courbe fermée entourant chaque flux de réaction et agencés pour diriger le flux de gaz de périphérie en direction de chaque flux de réaction, l'injecteur de deuxième élément chimique étant agencé pour introduire le deuxième élément chimique dans la chambre (8) dans le flux de gaz de périphérie (7) après la zone d'interaction (14) de chaque flux de réaction, et/ou

il comprend en outre un injecteur de gaz de confinement agencé pour introduire dans la chambre de réaction (8), avant la zone d'interaction (14) de chaque flux de réaction, un flux de gaz de confinement (2) entourant chaque flux de réaction (1, 100, 101, 102, 103, 104, 105, 106) et se propageant selon la direction de flux (11), et **en ce que** l'injecteur de deuxième élément chimique comprend l'injecteur de gaz de confinement.

**18.** Dispositif selon la revendication 17, **caractérisé en ce que** le réactif (1; 101, 102, 103) est dénué d'agent oxydant le premier élément chimique.

**19.** Dispositif selon la revendication 17 ou 18, **caractérisé en ce que** l'injecteur de deuxième élément chimique est agencé pour introduire le deuxième élément chimique dans la chambre (8) dans le flux de gaz de périphérie (7) entourant chaque flux de réaction (1, 100, 101, 102, 103, 104, 105, 106), émis à partir de plusieurs points (17) répartis le long de la courbe fermée entourant chaque flux de réaction et agencés pour diriger le flux de gaz de périphérie en direction de chaque flux de réaction, l'injecteur de deuxième élément chimique étant agencé pour introduire le deuxième élément chimique dans la chambre (8) dans le flux de gaz de périphérie (7) après la zone d'interaction (14) de chaque flux de réaction.

**20.** Dispositif selon l'une quelconque des revendications 17 à 19, **caractérisé en ce qu'**il comprend l'injecteur de gaz de confinement agencé pour introduire dans la chambre de réaction (8), avant la zone d'interaction (14) de chaque flux de réaction, le flux de gaz de confinement (2) entourant chaque flux de réaction (1, 100, 101, 102, 103, 104, 105, 106) et se propageant selon la direction de flux (11), et **en ce que** l'injecteur de deuxième élément chimique comprend l'injecteur de gaz de confinement.

**21.** Dispositif selon la revendication 20, **caractérisé en ce que** l'injecteur d'au moins un flux de réaction est agencé pour introduire dans la chambre au moins un alignement de plusieurs flux de réaction (101, 102, 103; 104, 105, 106) séparés les uns des autres par le flux de gaz de confinement (2) et comprenant chacun le premier élément chimique et se propageant chacun selon la direction de flux (11).

22. Dispositif selon la revendication 21, **caractérisé en ce que** l'émetteur est agencé pour que le faisceau de rayonnement (3) se propage le long d'une direction de rayonnement (12) perpendiculaire à la direction de flux (11), et **en ce que** l'injecteur d'au moins un flux de réaction est agencé pour que les flux de chaque alignement de flux de réaction (101, 102, 103 ; 104, 105, 106) soient alignés le long d'une direction d'alignement (18) perpendiculaire à la direction de flux (11) et à la direction de rayonnement (12).

23. Dispositif selon l'une quelconque des revendications 17 à 22, **caractérisé en ce que** l'émetteur est agencé pour que le faisceau de rayonnement (3) se propage le long d'une direction de rayonnement (12) perpendiculaire à la direction de flux (11), et **en ce que** l'injecteur d'au moins un flux de réaction est agencé pour que chaque flux de réaction (1, 100, 101, 102, 103, 104, 105, 106) possède, dans un plan perpendiculaire à la direction de flux (11), une section s'étendant longitudinalement le long d'une direction d'élongation (13) perpendiculaire à la direction de flux (11) et à la direction de rayonnement (12).

24. Dispositif selon l'une quelconque des revendications 17 à 23, **caractérisé en ce que** l'injecteur de deuxième élément chimique est agencé pour introduire le deuxième élément dans la chambre (8) avec le premier élément chimique dans chaque flux de réaction (1, 100, 101, 102, 103, 104, 105, 106) avant la zone d'interaction (14) de chaque flux de réaction.

25. Dispositif selon l'une quelconque des revendications 17 à 24, **caractérisé en ce que** le réactif comprend en outre du carbone.

**Patentansprüche**

1. Verfahren zum Herstellen von Teilchen (10), umfassend die nachfolgenden Schritte:

- Einleiten zumindest eines Reaktionsstroms (1, 100, 101, 102, 103, 104, 105, 106), der als erstes chemisches Element Silicium enthält und sich in einer Strömungsrichtung (11) ausbreitet, in eine Reaktionskammer (8),
- Projizieren eines Strahlungsbündels (3) durch die Reaktionskammer (8), das sich mit jedem Reaktionsstrom (1, 100, 101, 102, 103, 104, 105, 106) in einem Wechselwirkungsbereich (14) pro Reaktionsstrom schneidet, um in jedem Reaktionsstrom Teilchenkerne (15) zu bilden, die das erste chemische Element enthalten, und
- Einleiten eines zweiten chemischen Elements in die Reaktionskammer (8), das mit jedem Reaktionsstrom (1, 100, 101, 102, 103, 104, 105, 106) in Wechselwirkung tritt, um die Teilchenkerne (15) mit einer Schicht (16) zu überdecken, die das zweite chemische Element enthält, wobei dieses zweite chemische Element Aluminium ist,

wobei das zweite chemische Element in die Kammer (8) in einen Gasstrom (2; 7) eingeleitet wird, der jeden Reaktionsstrom (1, 100, 101, 102, 103, 104, 105, 106) umgibt,
**dadurch gekennzeichnet, dass**:

- das zweite chemische Element in die Kammer (8) in einen Umfangsgasstrom (7) eingeleitet wird, der jeden Reaktionsstrom (1, 100, 101, 102, 103, 104, 105, 106) umgibt, ausgehend von mehreren Stellen (17) ausgegeben wird, die entlang einer jeden Reaktionsstrom (1, 100, 101, 102, 103, 104, 105, 106) umgebenden, geschlossenen Kurve verteilt sind, und sich in Richtung eines jeden Reaktionsstroms ausbreitet, wobei das zweite chemische Element in die Kammer (8) in den Umfangsgasstrom (7) nach dem Wechselwirkungsbereich (14) eines jeden Reaktionsstroms eingeleitet wird, und/oder
- es ferner als Schritt das Einleiten eines Umhüllungsgasstroms (2), der jeden Reaktionsstrom (1, 100, 101, 102, 103, 104, 105, 106) umgibt und sich in Strömungsrichtung (11) ausbreitet, in die Reaktionskammer (8) vor dem Wechselwirkungsbereich (14) eines jeden Reaktionsstroms umfasst, wobei das zweite chemische Element vor dem Wechselwirkungsbereich (14) eines jeden Reaktionsstroms in die Kammer (8) in den Umhüllungsgasstrom (2) eingeleitet wird.

2. Verfahren nach Anspruch 1, **dadurch gekennzeichnet, dass** jeder Reaktionsstrom (1, 100, 101, 102, 103, 104, 105, 106) frei von das erste chemische Element oxidierenden Oxidationsmitteln ist und die Teilchenkerne (15) das erste chemische Element in nicht oxidierter Form enthalten.

3. Verfahren nach Anspruch 1 oder 2, **dadurch gekennzeichnet, dass** das zweite chemische Element in die Kammer (8) in den Umfangsgasstrom (7) eingeleitet wird, der jeden Reaktionsstrom (1, 100, 101, 102, 103, 104, 105, 106) umgibt, ausgehend von mehreren Stellen (17) ausgegeben wird, die entlang der jeden Reaktionsstrom (1, 100, 101, 102, 103, 104, 105, 106) umgebenden geschlossenen Kurve verteilt sind, und sich in Richtung eines jeden Reaktionsstroms ausbreitet, wobei das zweite chemische Element nach dem Wechselwirkungsbereich (14) eines jeden Reaktionsstroms in die Kammer (8) in den Umfangsgasstrom (7) eingeleitet wird.

4. Verfahren nach einem der Ansprüche 1 bis 3, **dadurch gekennzeichnet, dass** es den Schritt des Einleitens des Umhüllungsgasstroms (2), der jeden Reaktionsstrom (1, 100, 101, 102, 103, 104, 105, 106) umgibt und sich in Strömungsrichtung (11) ausbreitet, vor dem Wechselwirkungsbereich (14) eines jeden Reaktionsstroms in die Reaktionskammer (8) umfasst, wobei das zweite chemische Element vor dem Wechselwirkungsbereich (14) eines jeden Reaktionsstroms in die Kammer (8) in den Umhüllungsgasstrom (2) eingeleitet wird.

5. Verfahren nach Anspruch 4, **dadurch gekennzeichnet, dass** das Einleiten des zumindest einen Reaktionsstroms ein Einführen von zumindest einer Ausrichtung von mehreren Reaktionsströmen (101, 102, 103; 104, 105, 106) umfasst, die durch den Umhüllungsgasstrom (2) voneinander getrennt sind und jeweils das erste chemische Element enthalten und sich jeweils in Strömungsrichtung (11) ausbreiten.

6. Verfahren nach Anspruch 5, **dadurch gekennzeichnet, dass** das Strahlungsbündel (3) sich entlang einer Strahlungsrichtung (12) ausbreitet, die senkrecht zur Strömungsrichtung (11) verläuft, und dass die Ströme einer jeden Ausrichtung von Reaktionsströmen (101, 102, 103; 104, 105, 106) entlang einer Ausrichtungsrichtung (18) ausgerichtet werden, die senkrecht zur Strömungsrichtung (11) und zur Strahlungsrichtung (12) verläuft.

7. Verfahren nach einem der Ansprüche 1 bis 6, **dadurch gekennzeichnet, dass** das Strahlungsbündel (3) sich entlang einer Strahlungsrichtung (12) ausbreitet, die senkrecht zur Strömungsrichtung (11) verläuft, und dass jeder Reaktionsstrom (1, 100, 101, 102, 103, 104, 105, 106) in einer Ebene senkrecht zur Strömungsrichtung (11) einen Abschnitt aufweist, der sich längs entlang einer Ausdehnungsrichtung (13) erstreckt, die senkrecht zur Strömungsrichtung (11) und zur Strahlungsrichtung (12) verläuft.

8. Verfahren nach einem der vorangehenden Ansprüche, **dadurch gekennzeichnet, dass** das zweite chemische Element in die Kammer (8) mit dem ersten chemischen Element in jeden Reaktionsstrom (1, 100, 101, 102, 103, 104, 105, 106) vor dem Wechselwirkungsbereich (14) eines jeden Reaktionsstroms eingeleitet wird.

9. Verfahren nach einem der vorangehenden Ansprüche, **dadurch gekennzeichnet, dass** das erste chemische Element in Form von $SiH_4$ in die Kammer (8) eingeleitet wird.

10. Verfahren nach einem der vorangehenden Ansprüche, **dadurch gekennzeichnet, dass** die Kerne (15) der Teilchen (10) aus Silicium bestehen.

11. Verfahren nach einem der Ansprüche 1 bis 9, **dadurch gekennzeichnet, dass** Kohlenstoff mit dem ersten chemischen Element in jeden Reaktionsstrom vor dem Wechselwirkungsbereich eines jeden Reaktionsstroms in die Kammer eingeleitet wird, so dass die Teilchenkerne Siliciumcarbid enthalten.

12. Teilchen, jeweils enthaltend:

    - einen Kern (15), der als erstes chemisches Element Silicium nur in nicht oxidierter Form enthält und einen Durchmesser zwischen 3 und 900 nm hat, und
    - einer den Kern umgebenden Schicht (16), die als zweites chemisches Element Aluminium enthält und eine Schichtdicke von mindestens 0,5 nm hat.

13. Teilchen nach Anspruch 12, **dadurch gekennzeichnet, dass** deren Durchmesser kleiner als 100 Nanometer ist.

14. Teilchen nach Anspruch 12 oder 13, **dadurch gekennzeichnet, dass** der Kern aus Silicium besteht.

15. Teilchen nach einem der Ansprüche 12 bis 14, **dadurch gekennzeichnet, dass** der Kern Siliciumcarbid enthält oder daraus besteht.

16. Verfahren, **dadurch gekennzeichnet, dass** Aluminiumteilchen mit Teilchen nach einem der Ansprüche 12 bis 15 vermischt werden, dann das Gemisch erwärmt und dann wieder abgekühlt wird, so dass die Aluminiumteilchen fest mit den Teilchen nach einem der Ansprüche 12 bis 15 verbunden werden, um ein mit Silicium oder Siliciumcarbid angereichertes Aluminiummaterial zu erhalten.

17. Vorrichtung (9) zum Herstellen von Teilchen (10), enthaltend:

    - eine Reagenzquelle mit einem Reagenz, wobei dieses Reagenz als erstes chemisches Element Silicium enthält;
    - eine Reaktionskammer (8), die mit der Reagenzquelle verbunden ist;
    - einen Reagenzinjektor, der dazu angeordnet ist, von der Reagenzquelle stammend zumindest einen Reaktionsstrom (1, 100, 101, 102, 103, 104, 105, 106) in die Kammer einzuleiten, der das Reagenz enthält und sich in einer Strömungsrichtung (11) in einem Reaktionsstrombereich (6) pro Reaktionsstrom ausbreitet,

- einen Strahlungsbündelsender, der dazu angeordnet ist, das Strahlungsbündel (3) durch die Reaktionskammer (8) zu projizieren, das sich mit jedem Bereich (6) des Reaktionsstroms (1, 100, 101, 102, 103, 104, 105, 106) in einem Wechselwirkungsbereich (14) pro Reaktionsstrom schneidet,

- eine Quelle eines zweiten chemischen Elements, wobei dieses zweite chemische Element Aluminium ist, und

- einen Injektor für das zweite Element, der dazu ausgebildet ist, das zweite chemische Element ausgehend von der Quelle des zweiten Elements in die Reaktionskammer (8) einzuleiten, so dass dieses zweite chemische Element dazu geeignet ist, in der Kammer (8) mit jedem Reaktionsstrom (1, 100, 101, 102, 103, 104, 105, 106) in Wechselwirkung zu treten,

wobei der Injektor für das zweite chemische Element dazu ausgebildet ist, das zweite chemische Element in die Kammer (8) in einen Gasstrom (2; 7) einzuleiten, welcher jeden Reaktionsstrom (1, 100, 101, 102, 103, 104, 105, 106) umgibt, **dadurch gekennzeichnet, dass**

- der Injektor für das zweite chemische Element dazu ausgebildet ist, das zweite chemische Element in die Kammer (8) in einen Umfangsgasstrom (7), der jeden Reaktionsstrom (1, 100, 101, 102, 103, 104, 105, 106) umgibt, einzuleiten, wobei der Umfangsgasstrom (7) ausgehend von mehreren Stellen (17) ausgegeben wird, die entlang einer jeden Reaktionsstrom umgebenden, geschlossenen Kurve verteilt sind und dazu angeordnet sind, den Umfangsgasstrom in Richtung eines jeden Reaktionsstroms zu lenken, wobei der Injektor für das zweite chemische Element angeordnet ist zum Einleiten des zweiten chemischen Elements in die Kammer (8) in den Umfangsgasstrom (7) nach dem Wechselwirkungsbereich (14) eines jeden Reaktionsstroms einzuleiten, und/oder dass

- sie ferner einen Injektor für Umhüllungsgas enthält, der dazu angeordnet ist, vor dem Wechselwirkungsbereich (14) eines jeden Reaktionsstroms einen Umhüllungsgasstrom (2) in die Kammer (8) einzuleiten, der jeden Reaktionsstrom (1, 100, 101, 102, 103, 104, 105, 106) umgibt und sich in Strömungsrichtung (11) ausbreitet, und dass der Injektor für das zweite chemische Element den Umhüllungsgasinjektor enthält.

18. Vorrichtung nach Anspruch 17, **dadurch gekenn-**

**zeichnet, dass** das Reagenz (1; 101, 102, 103) frei von das erste chemische Element oxidierenden Oxidationsmitteln ist.

19. Vorrichtung nach Anspruch 17 oder 18, **dadurch gekennzeichnet, dass** der Injektor für das zweite chemische Element dazu angeordnet ist, das zweite chemische Element in die Kammer (8) in den Umfangsgasstrom (7), der jeden Reaktionsstrom (1, 100, 101, 102, 103, 104, 105, 106) umgibt, einzuleiten, wobei der Umfangsgasstrom (7) ausgehend von mehreren Stellen (17) ausgegeben wird, die entlang der jeden Reaktionsstrom umgebenden geschlossenen Kurve verteilt sind und dazu angeordnet sind, den Umfangsgasstrom in Richtung eines jeden Reaktionsstroms zu lenken, wobei der Injektor für das zweite chemische Element dazu angeordnet ist, das zweite chemische Element nach dem Wechselwirkungsbereich (14) eines jeden Reaktionsstroms in die Kammer (8) in den Umfangsgasstrom (7) einzuleiten.

20. Vorrichtung nach einem der Ansprüche 17 bis 19, **dadurch gekennzeichnet, dass** sie den Umhüllungsgasinjektor enthält, der dazu angeordnet ist, um vor dem Wechselwirkungsbereich (14) eines jeden Reaktionsstroms den Umhüllungsgasstrom (2) in die Reaktionskammer (8) einzuleiten, der jeden Reaktionsstrom (1, 100, 101, 102, 103, 104, 105, 106) umgibt und sich in Strömungsrichtung (11) ausbreitet, und dass der Injektor für das zweite chemische Element den Umhüllungsgasinjektor enthält.

21. Vorrichtung nach Anspruch 20, **dadurch gekennzeichnet, dass** der Injektor für zumindest einen Reaktionsstrom dazu angeordnet ist, um zumindest eine Ausrichtung von mehreren Reaktionsströmen (1, 100, 101, 102, 103, 104, 105, 106) in die Kammer einzuführen, die durch den Umhüllungsgasstrom (2) voneinander getrennt sind und jeweils das erste chemische Element enthalten und sich jeweils in Strömungsrichtung (11) ausbreiten.

22. Vorrichtung nach Anspruch 21, **dadurch gekennzeichnet, dass** der Emitter so angeordnet ist, dass das Strahlungsbündel (3) sich entlang einer Strahlungsrichtung (12) ausbreitet, die senkrecht zur Strömungsrichtung (11) verläuft, und dass der Injektor für zumindest einen Reaktionsstrom so angeordnet ist, dass die Ströme einer jeden Ausrichtung von Reaktionsströmen (101, 102, 103; 104, 105, 106) entlang einer Ausrichtungsrichtung (18) ausgerichtet sind, die senkrecht zur Strömungsrichtung (11) und zur Strahlungsrichtung (12) verläuft.

23. Vorrichtung nach einem der Ansprüche 17 bis 22, **dadurch gekennzeichnet, dass** der Emitter so angeordnet ist, dass das Strahlungsbündel (3) sich entlang einer Strahlungsrichtung (12) ausbreitet, die senkrecht zur Strömungsrichtung (11) verläuft, und dass der Injektor für zumindest einen Reaktionsstrom so angeordnet ist, dass jeder Reaktionsstrom (1, 100, 101, 102, 103, 104, 105, 106) in einer Ebene senkrecht zur Strömungsrichtung (11) einen Abschnitt aufweist, der sich längs entlang einer Ausdehnungsrichtung (13) erstreckt, die senkrecht zur Strömungsrichtung (11) und zur Strahlungsrichtung (12) verläuft.

24. Vorrichtung nach einem der Ansprüche 17 bis 23, **dadurch gekennzeichnet, dass** der Injektor für das zweite chemische Element dazu angeordnet ist, um das zweite Element mit dem ersten chemischen Element in jeden Reaktionsstrom (1, 100, 101, 102, 103, 104, 105, 106) vor dem Wechselwirkungsbereich (14) eines jeden Reaktionsstroms in die Kammer (8) einzuleiten.

25. Vorrichtung nach einem der Ansprüche 17 bis 24, **dadurch gekennzeichnet, dass** das Reagenz ferner Kohlenstoff enthält.

**Claims**

1. Process for producing particles (10), comprising the following steps :

    - introducing, into a reaction chamber (8), at least one reaction stream (1, 100, 101, 102, 103, 104, 105, 106) comprising silicon as a first chemical element and propagating in a direction of flow (11),
    - projecting a radiation beam (3) through the reaction chamber (8) intersecting with each reaction stream (1, 100, 101, 102, 103, 104, 105, 106) in one interaction zone (14) per reaction stream, in order to form, in each reaction stream, particle cores (15) comprising the first chemical element, and
    - introducing, into the reaction chamber (8), a second chemical element interacting with each reaction stream (1, 100, 101, 102, 103, 104, 105, 106) in order to cover the particle cores (15) with a layer (16) comprising the second chemical element, this second chemical element being aluminium

    the second chemical element being introduced into the chamber (8) in a gas stream (2; 7) surrounding each reaction stream (1, 100, 101, 102, 103, 104, 105, 106), **characterized in that**:

    - the second chemical element is introduced into the chamber (8) in a peripheral gas stream (7) surrounding each reaction stream (1, 100, 101, 102, 103, 104, 105, 106), emitted from several points (17) distributed along a closed curve surrounding each reaction stream (1, 100, 101, 102, 103, 104, 105, 106) and propagating in the direction of each reaction stream, the second chemical element being introduced into the chamber (8) in the peripheral gas stream (7) after the interaction zone (14) of each reaction stream, and/or
    - it further comprises a step of introducing, into the reaction chamber (8), before the interaction zone (14) of each reaction stream, a confining gas stream (2) surrounding each reaction stream (1, 100, 101, 102, 103, 104, 105, 106) and propagating in the direction of flow (11), the second chemical element being introduced into the chamber (8) in the confining gas stream (2) before the interaction zone (14) of each reaction stream.

2. Process according to claim 1, **characterized in that** each reaction stream (1, 100, 101, 102, 103, 104, 105, 106) is devoid of any agent that oxidizes the first chemical element, and the particle cores (15) comprise the first chemical element in the non-oxidized form.

3. Process according to claim 1 or 2, **characterized in that** the second chemical element is introduced into the chamber (8) in the peripheral gas stream (7) surrounding each reaction stream (1, 100, 101, 102, 103, 104, 105, 106), emitted from several points (17) distributed along the closed curve surrounding each reaction stream (1, 100, 101, 102, 103, 104, 105, 106) and propagating in the direction of each reaction stream, the second chemical element being introduced into the chamber (8) in the peripheral gas stream (7) after the interaction zone (14) of each reaction stream.

4. Process according to any one of claims 1 to 3, **characterized in that** it further comprises a step of introducing, into the reaction chamber (8), before the interaction zone (14) of each reaction stream, the confining gas stream (2) surrounding each reaction stream (1, 100, 101, 102, 103, 104, 105, 106) and propagating in the direction of flow (11), the second chemical element being introduced into the chamber (8) in the confining gas stream (2) before the interaction zone (14) of each reaction stream.

5. Process according to claim 4, **characterized in that** the introduction of at least one reaction stream comprises introducing at least one alignment of several reaction streams (101, 102, 103; 104, 105, 106) separated from one another by the confining gas stream (2) and each comprising the first chemical element and each propagating in the direction of flow (11).

**6.** Process according to claim 5, **characterized in that** the radiation beam (3) propagates in a direction of radiation (12) perpendicular to the direction of flow (11), and **in that** the streams of each alignment of reaction streams (101, 102, 103; 104, 105, 106) are aligned in a direction of alignment (18) perpendicular to the direction of flow (11) and to the direction of radiation (12).

**7.** Process according to any one of claims 1 to 6, **characterized in that** the radiation beam (3) propagates in a direction of radiation (12) perpendicular to the direction of flow (11), and **in that** each reaction stream (1, 100, 101, 102, 103, 104, 105, 106) has, in a plane perpendicular to the direction of flow (11), a section extending longitudinally in a direction of elongation (13) perpendicular to the direction of flow (11) and to the direction of radiation (12).

**8.** Process according to any one of the preceding claims, **characterized in that** the second chemical element is introduced into the chamber (8) with the first chemical element in each reaction stream (1, 100, 101, 102, 103, 104, 105, 106) before the interaction zone (14) of each reaction stream.

**9.** Process according to any one of the preceding claims, **characterized in that** the first chemical element is introduced into the chamber (8) in the form of $SiH_4$.

**10.** Process according to any one of the preceding claims, **characterized in that** the cores (15) of particles (10) are of silicon.

**11.** Process according to any one of claims 1 to 9, **characterized in that** carbon is introduced into the chamber with the first chemical element in each reaction stream before the interaction zone of each reaction stream, so that the particle cores comprise silicon carbide.

**12.** Particles, each comprising:

- a core (15) comprising silicon as a first chemical element only in the non-oxidized form, and having a diameter comprised between 3 nm and 900 nm,
- a layer (16) surrounding the core, comprising aluminium as a second chemical element and having a layer thickness of at least 0.5 nm.

**13.** Particles according to claim 12, **characterized in that** they have a diameter which is less than 100 nanometres.

**14.** Particles according to claim 12 or 13, **characterized in that** the core is of silicon.

**15.** Particles according to any one of claims 12 to 14, **characterized in that** the core comprises or consists of silicon carbide.

**16.** Process, **characterized in that** aluminium particles are mixed with particles according to any one of claims 12 to 15, then **in that** the mixture is heated and then cooled so as to bond the aluminium particles with particles according to any one of claims 12 to 15, in order to obtain a material of aluminium enriched with silicon or with silicon carbide.

**17.** Device (9) for producing particles (10), comprising:

- a reagent source comprising reagent, this reagent comprising silicon as first chemical element;
- a reaction chamber (8) connected to the reagent source;
- a reagent injector arranged in order to introduce, into the chamber (8) and originating from the reagent source, at least one reaction stream (1, 100, 101, 102, 103, 104, 105, 106) comprising said reagent, and propagating in a direction of flow (11) in one reaction stream zone (6) per reaction stream,

  - an emitter of a radiation beam arranged in order to project the radiation beam (3) through the reaction chamber (8) intersecting with each zone (6) of reaction stream (1, 100, 101, 102, 103, 104, 105, 106) in one interaction zone (14) per reaction stream,
  - a source of a second chemical element, this second chemical element being aluminium, and
  - an injector of a second element arranged in order to introduce, into the reaction chamber (8), the second chemical element from the source of second element so that this second chemical element is able to interact in chamber (8) with each reaction stream (1, 100, 101, 102, 103, 104, 105, 106)

the injector of the second chemical element being arranged in order to introduce the second chemical element into chamber (8) in a gas stream (2; 7) surrounding each reaction stream (1, 100, 101, 102, 103, 104, 105, 106), **characterized in that**:

- the injector of the second chemical element is arranged in order to introduce the second chemical element into chamber (8) in a peripheral gas stream (7) surrounding each reaction stream (1, 100, 101, 102, 103, 104, 105, 106), emitted from several points (17) distributed along a closed curve surrounding each reaction stream and arranged in order to direct the peripheral gas stream in the direction of each reaction stream, the injector of the second chemical element being arranged in order to introduce the second chemical element into chamber (8) in the peripheral gas stream (7) after the interaction zone (14) of each reaction stream, and/or

- it further comprises an injector of confining gas arranged in order to introduce, into the reaction chamber (8), before the interaction zone (14) of each reaction stream, a confining gas stream (2) surrounding each reaction stream (1, 100, 101, 102, 103, 104, 105, 106) and propagating in the direction of flow (11), and **in that** the injector of the second chemical element comprises the injector of confining gas.

18. Device according to claim 17, **characterized in that** the reagent (1; 101, 102, 103) is devoid of any agent that oxidizes the first chemical element.

19. Device according to claim 17 or 18, **characterized in that** the injector of the second chemical element is arranged in order to introduce the second chemical element into chamber (8) in the peripheral gas stream (7) surrounding each reaction stream (1, 100, 101, 102, 103, 104, 105, 106), emitted from several points (17) distributed along a closed curve surrounding each reaction stream and arranged in order to direct the peripheral gas stream in the direction of each reaction stream, the injector of the second chemical element being arranged in order to introduce the second chemical element into chamber (8) in the peripheral gas stream (7) after the interaction zone (14) of each reaction stream.

20. Device according to claims 17 to 19, **characterized in that** it further comprises the injector of confining gas arranged in order to introduce, into the reaction chamber (8), before the interaction zone (14) of each reaction stream, the confining gas stream (2) surrounding each reaction stream (1, 100, 101, 102, 103, 104, 105, 106) and propagating in the direction of flow (11), and **in that** the injector of the second chemical element comprises the injector of confining gas.

21. Device according to claim 20, **characterized in that** the injector of at least one reaction stream is arranged in order to introduce, into the chamber, at least one alignment of several reaction streams (101, 102, 103; 104, 105, 106) separated from one another by the confining gas stream (2) and each comprising the first chemical element and each propagating in the direction of flow (11).

22. Device according to claim 21, **characterized in that** the emitter is arranged so that the radiation beam (3) propagates in a direction of radiation (12) perpendicular to the direction of flow (11), and **in that** the injector of at least one reaction stream is arranged so that the streams of each alignment of reaction streams (101, 102, 103; 104, 105, 106) are aligned in a direction of alignment (18) perpendicular to the direction of flow (11) and to the direction of radiation (12).

23. Device according to any one of claims 17 to 22, **characterized in that** the emitter is arranged so that the radiation beam (3) propagates in a direction of radiation (12) perpendicular to the direction of flow (11), and **in that** the injector of at least one reaction stream is arranged so that each reaction stream (1, 100, 101, 102, 103, 104, 105, 106) has, in a plane perpendicular to the direction of flow (11), a section extending longitudinally in a direction of elongation (13) perpendicular to the direction of flow (11) and to the direction of radiation (12).

24. Device according to any one of claims 17 to 23, **characterized in that** the injector of the second chemical element is arranged in order to introduce the second element into the chamber (8) with the first chemical element in each reaction stream (1, 100, 101, 102, 103, 104, 105, 106) before the interaction zone (14) of each reaction stream.

25. Device according to any one of claims 17 to 24, **characterized in that** the reagent further comprises carbon.

EP 3 074 469 B1

FIG. 1

FIG. 2

21

FIG. 3

FIG. 4

FIG. 5

FIG. 6

1;100;101;102;103;104;105;106;6

FIG. 7

1;100;101;102;103;104;105;106

FIG. 8

FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4505720 A
- US 4424066 A
- US 2009026421 A1
- US 2010221544 A1

- WO 0132799 A
- FR 2894493
- FR 2877591

**Littérature non-brevet citée dans la description**

- **LUTHER.** Alumina surface modification of silicon nitride for colloidal processing. *journal of the American Ceramic Society,* vol. 78 (8

- **RODOT et al.** *Métallisation par CVD assistée par laser,* vol. 40 (227